(19) **Europäisches Patentamt / European Patent Office / Office européen des brevets**

(11) **EP 4 765 655 A1**

(12) **EUROPEAN PATENT APPLICATION**
published in accordance with Art. 153(4) EPC

(43) Date of publication:
**24.06.2026 Bulletin 2026/26**

(21) Application number: **23962019.8**

(22) Date of filing: **22.12.2023**

(51) International Patent Classification (IPC):
*H04B 1/707* (2011.01)　　*H04L 27/26* (2006.01)

(52) Cooperative Patent Classification (CPC):
**H04B 1/707; H04L 27/26**

(86) International application number:
**PCT/CN2023/141268**

(87) International publication number:
**WO 2025/129697 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **WU, Zuomin**
**Dongguan, Guangdong 523860 (CN)**

(74) Representative: **Aldridge, Henry Alexander et al**
**Venner Shipley LLP**
**TIDE Bankside**
**8 Emerson Street**
**London SE1 9DU (GB)**

(54) **CHANNEL TRANSMISSION METHOD, DEVICE, AND STORAGE MEDIUM**

(57)　Embodiments of the present application provide a channel transmission method, a device, and a storage medium. The method comprises: a terminal device receives first indication information sent by a network device, the first indication information being used for determining to use an orthogonal cover code (OCC) spread spectrum mode in a time domain to transmit a first physical uplink shared channel (PUSCH); and the terminal device uses the OCC spread spectrum mode in the time domain to perform spectrum spreading on the first PUSCH, and sends the first PUSCH to the network device.

FIG. 7

EP 4 765 655 A1

**Description**

TECHNICAL FIELD

Embodiments of the present disclosure relate to the field of mobile communication technologies, and in particular to a method for channel transmission, a device, and a storage medium.

BACKGROUND

In order to enhance uplink coverage of a cell, a physical uplink shared channel (PUSCH) is transmitted with repetition. For example, one PUSCH is repeated N times in the time domain. Since one PUSCH needs to be repeatedly transmitted N times, the occupied uplink resources are N times those occupied when the PUSCH is transmitted without repetition, which will lead to a reduction in the uplink capacity of the system.

SUMMARY

Embodiments of the present disclosure provide a method for channel transmission, a device, and a storage medium.

A method for channel transmission according to an embodiment of the present disclosure includes the following operations.

A terminal device receives first indication information transmitted by a network device. Here, the first indication information is used for determining that a first physical uplink shared channel (PUSCH) is transmitted in a time domain in a manner of orthogonal cover code (OCC) spreading.

The terminal device spreads the first PUSCH in the time domain in the manner of OCC spreading, and transmits the first PUSCH to the network device.

A method for channel transmission according to an embodiment of the present disclosure includes the following operations.

A network device transmits first indication information to a terminal device. Here, the first indication information is used for determining that a first physical uplink shared channel (PUSCH) is transmitted in a time domain in a manner of orthogonal cover code (OCC) spreading.

The network device receives the first PUSCH transmitted by the terminal device, and despreads the first PUSCH in the time domain in the manner of OCC spreading.

A terminal device according to an embodiment of the present disclosure includes a first communication unit and a first processing unit.

The first communication unit is configured to receive first indication information transmitted by a network device. Here, the first indication information is used for determining that a first physical uplink shared channel (PUSCH) is transmitted in a time domain in a manner of orthogonal cover code (OCC) spreading.

The first processing unit is configured to spread the first PUSCH in the time domain in the manner of OCC spreading.

The first communication unit is further configured to transmit the first PUSCH to the network device.

A network device according to an embodiment of the present disclosure includes a second communication unit and a second processing unit.

The second communication unit is configured to transmit first indication information to a terminal device. Here, the first indication information is used for determining that a first physical uplink shared channel (PUSCH) is transmitted in a time domain in a manner of orthogonal cover code (OCC) spreading.

The second communication unit is further configured to receive the first PUSCH transmitted by the terminal device.

A second processing unit configured to despread the first PUSCH in the time domain in the manner of OCC spreading.

A communication device provided by an embodiment of the present disclosure may be the terminal device or the network device according to the above solutions. The communication device includes a processor and a memory. The memory is configured to store a computer program, and the processor is configured to invoke and execute the computer program stored in the memory to perform the above methods for channel transmission.

A chip according to an embodiment of the present disclosure is configured for implementing the above methods for channel transmission.

Specifically, the chip includes a processor for invoking and executing a computer program from a memory so that a device equipped with the chip performs the above methods for channel transmission.

A computer-readable storage medium provided by an embodiment of the present disclosure is configured for storing a computer program that causes a computer to perform the above methods for channel transmission.

A computer program product provided by an embodiment of the present disclosure includes computer program instructions that cause a computer to perform the above methods for channel transmission.

A computer program provided by an embodiment of the present disclosure causes a computer to perform the above methods for channel transmission when it is executed on the computer.

According to the above technical solutions, based on the first indication information transmitted by the network device, the terminal device performs time-domain spreading on the PUSCH to be transmitted by the terminal device in the time domain in the manner of OCC spreading, thereby improving the uplink capacity of the system while ensuring the uplink coverage requirements.

BRIEF DESCRIPTION OF THE DRAWINGS

The accompanying drawings described herein are intended to provide a further understanding of the present disclosure and constitute a part of the present disclosure. The schematic embodiments of the present disclosure and the description thereof are intended to explain the present disclosure, and do not constitute an undue limitation of the present disclosure. In the drawings:

FIG. 1 is a diagram of an application scenario according to an embodiment of the present disclosure.
FIG. 2 is an architecture diagram of another communication system provided by an embodiment of the present disclosure.
FIG. 3 is an architecture diagram of another communication system provided by an embodiment of the present disclosure.
FIG. 4 is an architecture diagram of another communication system provided by an embodiment of the present disclosure.
FIG. 5 is an architecture diagram of another communication system provided by an embodiment of the present disclosure.
FIG. 6 is an architecture diagram of another communication system provided by an embodiment of the present disclosure.
FIG. 7 is an optional flowchart of a method for channel transmission provided by an embodiment of the present disclosure.
FIG. 8 is an optional diagram of a time-domain OCC spreading manner provided by an embodiment of the present disclosure.
FIG. 9 is an optional diagram of a time-domain OCC spreading manner provided by an embodiment of the present disclosure.
FIG. 10 is an optional diagram of a time-domain OCC spreading manner provided by an embodiment of the present disclosure.
FIG. 11 is an optional diagram of a time-domain OCC spreading manner provided by an embodiment of the present disclosure.
FIG. 12 is an optional diagram of a time-domain OCC spreading manner provided by an embodiment of the present disclosure.
FIG. 13 is an optional diagram of a time-domain OCC spreading manner provided by an embodiment of the present disclosure.
FIG. 14 is an optional diagram of a time-domain OCC spreading manner provided by an embodiment of the present disclosure.
FIG. 15 is an optional diagram of a time-domain OCC spreading manner provided by an embodiment of the present disclosure.
FIG. 16 is an optional diagram of a time-domain OCC spreading manner provided by an embodiment of the present disclosure.
FIG. 17 is an optional diagram of a time-domain OCC spreading manner provided by an embodiment of the present disclosure.
FIG. 18 is an optional diagram of a time-domain OCC spreading manner provided by an embodiment of the present disclosure.
FIG. 19 is an optional diagram of a time-domain OCC spreading manner provided by an embodiment of the present disclosure.
FIG. 20 is an optional diagram of a time-domain OCC spreading manner provided by an embodiment of the present disclosure.
FIG. 21 is an optional diagram of a time-domain OCC spreading manner provided by an embodiment of the present disclosure.

FIG. 22A is an optional diagram of a time-domain and frequency-domain OCC spreading manner provided by an embodiment of the present disclosure.

FIG. 22B is an optional diagram of a time-domain and frequency-domain OCC spreading manner provided by an embodiment of the present disclosure.

FIG. 23 is an optional flowchart of a method for channel transmission provided by an embodiment of the present disclosure.

FIG. 24 is an optional structural diagram of a terminal device provided by an embodiment of the present disclosure.

FIG. 25 is an optional structural diagram of a network device provided by an embodiment of the present disclosure.

FIG. 26 is a structural diagram of a communication device provided by an embodiment of the present disclosure.

FIG. 27 is a structural diagram of a chip according to an embodiment of the present disclosure.

FIG. 28 is a block diagram of a communication system provided by an embodiment of the present disclosure.

## DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all the embodiments. Based on the embodiments in the present disclosure, all other embodiments obtained by those skilled in the art without creative work fall within the scope of protection of the present disclosure.

Communication system scenarios include a terrestrial network (TN) and a non-terrestrial network (NTN). Among them, NTN generally provides communication services to ground users through satellite communication. At present, NTN systems include new radio NTN (NR-NTN) and internet of things NTN (IoT-NTN) systems, and may include other NTN systems in the future.

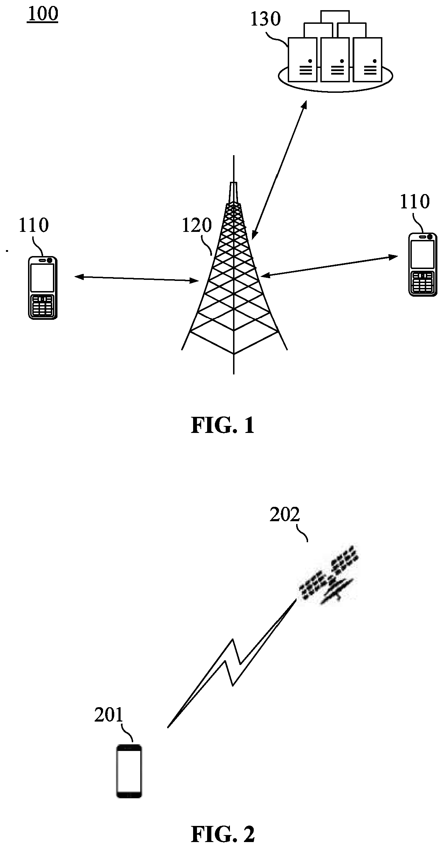

FIG. 1 is a diagram of an application scenario according to an embodiment of the present disclosure.

As illustrated in FIG. 1, the communication system 100 may include a terminal device 110 (or referred to as a communication terminal device) and a network device 120. The network device 120 may communicate with the terminal device 110 through an air interface. Multi-service transmission is supported between the terminal device 110 and the network device 120.

It should be understood that the embodiments of the present disclosure will be illustrated only by way of the communication system 100, but the embodiments of the present disclosure are not limited thereto. That is, the technical solution of the embodiments of the present disclosure can be applied to various communication systems, such as a long term evolution (LTE) system, an LTE time division duplex (TDD), a universal mobile telecommunication system (UMTS), an IoT system, a narrow band IoT (NB-IoT) system, an enhanced machine-type communications (eMTC) system, a 5G communication system (also referred to as a NR communication system), or a future communication system.

In the communication system 100 illustrated in FIG. 1, the network device 120 may be an access network device that communicates with the terminal device 110. The access network device may provide communication coverage for a particular geographic area and may communicate with terminal devices 110 (e.g., UEs) located within that coverage area.

The network device 120 may be an evolutional node B, eNB, or eNodeB in an LTE system, or a next generation radio access network (NG RAN) device, or a gNB in an NR system, or a radio controller in a cloud radio access network (CRAN). Or, the network device 120 may be a relay station, an access point, an in-vehicle device, a wearable device, a hub, a switch, a bridge, a router, or a network device in a future evolved public land mobile network (PLMN), or the like.

The terminal device 110 may be any terminal device including, but not limited to, a terminal device connected with the network device 120 or another terminal device via wired or wireless connection.

For example, the terminal device 110 may refer to an access terminal, user equipment (UE), a subscriber unit, a subscriber station, a mobile station, mobile equipment, a remote station, a remote terminal, a mobile device, a user terminal, a terminal, a wireless communication device, a user agent, or a user device. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device with wireless communication functionality, a computing device or other processing devices connected to a wireless modem, a vehicle-mounted device, a wearable device, a terminal device in a 5G network, or a terminal device in a future evolution network, or the like.

The terminal device 110 may be used for device-to-device (D2D) communication.

The wireless communication system 100 may further include a core network device 130 that communicates with the base station. The core network device 130 may be a 5G core (5GC) device, for example, an access and mobility management function (AMF), for another example, an authentication server function (AUSF), for another example, a user plane function (UPF), for another example, a session management function (SMF). Alternatively, the core network device 130 may also be an evolved packet core (EPC) device in an LTE network, for example, a session management function + core packet gateway (SMF+PGW-C) device. It should be understood that SMF+PGW-C may implement functions that the SMF and the PGW-C can implement. In the process of network evolution, the core network devices may be called by other names, or a new network entity may be formed by dividing the functions of the core network, which is not limited by the embodiments of the present disclosure.

The various functional units in the communication system 100 may also establish connections through next generation (NG) interfaces to achieve communication.

For example, the terminal device establishes an air interface connection with the access network device through a Uu interface, for transmission of user plane data and control plane signaling. The terminal device can establish a control plane signaling connection with the AMF through an NG interface 1 (N1 for short). The access network device, such as a next generation radio access base station (gNB), can establish a user plane data connection with the UPF through an NG interface 3 (N3 for short). The access network device can establish a control plane signaling connection with the AMF through an NG interface 2 (N2 for short). The UPF can establish a control plane signaling connection with the SMF through an NG interface 4 (N4 for short). The UPF can interact with a data network for user plane data through an NG interface 6 (N6 for short). The AMF may establish a control plane signaling connection with the SMF through an NG interface 11 (N11 for short). The SMF may establish a control plane signaling connection with a policy control function (PCF) through an NG interface 7 (N7 for short).

FIG. 1 exemplarily illustrates one base station, one core network device, and two terminal devices. Alternatively, the wireless communication system 100 may include multiple base station devices and another number of terminal devices may be included within the coverage of each base station, and the embodiment of the present disclosure is not limited thereto.

3GPP is studying NTN technology, which generally provides communication services to ground users through satellite communication. Compared with terrestrial cellular network communication, the satellite communication has many unique advantages. Firstly, the satellite communication is not constrained by the user's geographical location. For example, general terrestrial communication cannot cover areas such as oceans, mountains, and deserts where communication equipment cannot be deployed or where communication coverage is not provided due to sparse population. For the satellite communication, since a single satellite can cover a large ground area, and the satellite can orbit the Earth, theoretically every corner of the Earth can be covered by the satellite communication. Secondly, the satellite communication has significant social value. The satellite communication can provide coverage at a lower cost in remote mountainous areas, poor and underdeveloped countries or regions, so that people in these regions can enjoy advanced voice communication and mobile Internet technology, which is conducive to narrowing the digital divide with developed regions and promoting the development in these regions. Thirdly, the satellite communication covers a long distance, and the cost of communication does not increase significantly as the communication distance increases. Finally, the satellite communication has high stability and is not limited by natural disasters.

The NTN technology can be combined with various communication systems. For example, the NTN technology may be combined with the NR system as an NR-NTN system. For another example, the NTN technology can be combined with the IoT system as an IoT-NTN system. As an example, the IoT-NTN system may include an NB-IoT-NTN system and an eMTC-NTN system.

FIG. 2 is an architecture diagram of another communication system provided by an embodiment of the present disclosure.

As illustrated in FIG. 2, a terminal device 201 and a satellite 202 are included, and wireless communication can be performed between the terminal device 201 and the satellite 202. The network formed between the terminal device 201 and the satellite 202 may also be referred to as an NTN. In the architecture of the communication system illustrated in FIG. 2, the satellite 202 may have the function of a base station, and the terminal device 201 may communicate directly with the satellite 202. In the system architecture, the satellite 202 may be referred to as a network device. In some embodiments of the present disclosure, the communication system may include multiple network devices 1102, and another number of terminal devices may be included within the coverage of each network device 1102, which are not limited by the embodiments of the present disclosure.

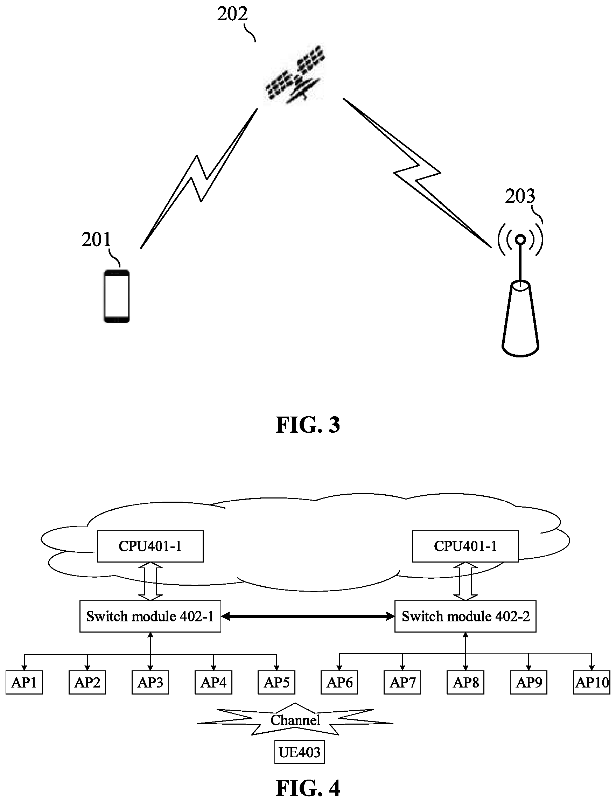

FIG. 3 is an architecture diagram of another communication system provided by an embodiment of the present disclosure.

As illustrated in FIG. 3, a terminal device 201, a satellite 202, and a base station 203 are included, wireless communication may be performed between the terminal device 201 and the satellite 202, and communication may be performed between the satellite 202 and the base station 203. The network formed between the terminal device 201, the satellite 202, and the base station 203 may also be referred to as an NTN. In the architecture of the communication system illustrated in FIG. 3, the satellite 202 may not have the function of a base station, and communication between the terminal device 201 and the base station 203 needs to be relayed by the satellite 202. In this system architecture, the base station 203 may be referred to as a network device. In some embodiments of the present disclosure, the communication system may include multiple base stations 203, and another number of terminal devices may be included within the coverage range of each base station 203, which are not limited by the embodiments of the present disclosure. The base station 203 may be the network device 120 in FIG. 1.

It should be understood that the satellites 202 described above include, but are not limited to: low-earth orbit (LEO) satellites, medium-earth orbit (MEO) satellites, geostationary earth orbit (GEO) satellites, high elliptical orbit (HEO) satellites and so on. The satellite may use multiple beams to cover the ground, for example, a satellite may form dozens or even hundreds of beams to cover the ground. In other words, a satellite beam can cover a ground area with a diameter of tens to hundreds of kilometers to ensure satellite coverage and increase the system capacity of the entire satellite communication system.

Future evolved communication systems such as beyond 5G (B5G) or 6G may also include distributed multiple-input multiple-output (distributed MIMO, also referred to as distributed antenna system) scenarios and/or massive multiple-input multiple-output (massive MIMO, also referred to as massive antenna matrix system) scenarios. In some cases, distributed MIMO and/or massive MIMO may also support cell-free or UE-centric networking scenarios. It should be understood that the above scenarios also apply to TN and/or NTN.

Exemplarily, FIG. 4 is an architecture diagram of another communication system provided by an embodiment of the present disclosure, and the system architecture includes distributed antenna ports (or distributed antenna port clusters), and/or central processing units (CPUs), and/or switch modules. As illustrated in FIG. 4, the communication system may include multiple distributed antenna ports (APs) (or distributed antenna port clusters), and different distributed antenna ports (or distributed antenna port clusters) are connected to the CPUs through the switch modules. The terminal device selects a suitable distributed antenna port (or distributed antenna port cluster) to serve it based on its geographical area. FIG. 4 exemplarily illustrates two CPUs (CPU 401-1 and CPU 401-2), two switch modules (switch module 402-1 and switch module 402-2), ten distributed antenna ports (AP1 to AP10) and one terminal device (UE 403). In some embodiments of the present disclosure, the communication system may include another number of CPUs, and/or another number of switch modules, and/or another number of distributed antenna ports (or distributed antenna port clusters), and/or another number of terminal devices, which are not limited by the embodiments of the present disclosure.

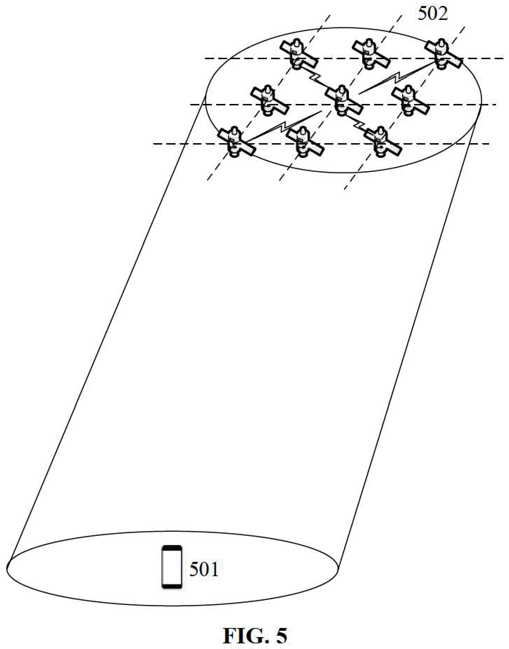

By way of example, FIG. 5 is an architecture diagram of another communication system provided by an embodiment of the present disclosure. With reference to FIG. 5, a terminal device 501 and a satellite cluster 502 are included, and wireless communication can be performed between the terminal device 501 and the satellite cluster 502. The network formed between the terminal device and the satellite cluster may also be referred to as an NTN. In the architecture of the communication system illustrated in FIG. 5, at least one satellite (e.g., a centrally located satellite) in the satellite cluster may have the function of a base station, and direct communication may be performed between the terminal device and the satellite cluster. In the system architecture, a satellite having a base station function can be referred to as a network device. In some embodiments of the present disclosure, the communication system may include multiple satellite clusters, and/or each satellite cluster may include one or more network devices, and/or another number of terminal devices may be included within the coverage of each satellite cluster or each network device, which are not limited by the embodiments of the present disclosure.

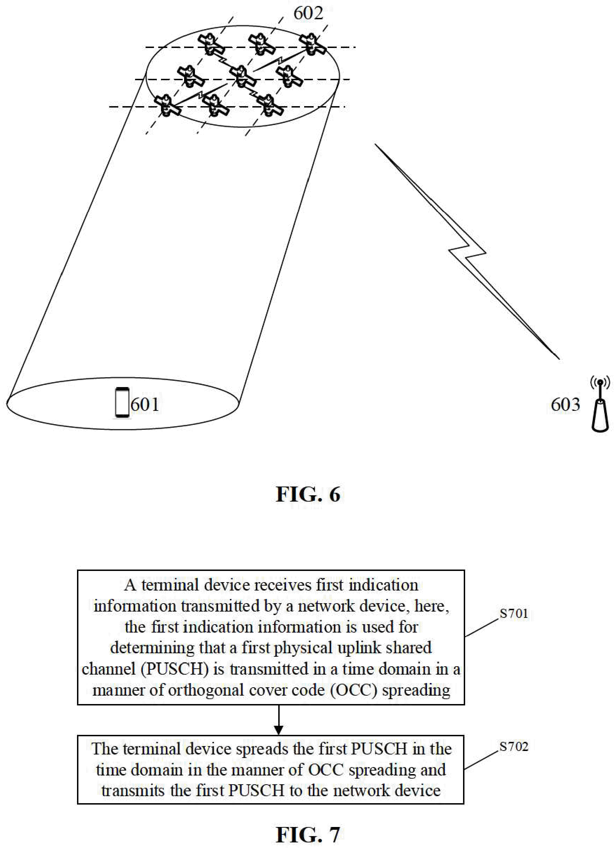

By way of example, FIG. 6 is an architecture diagram of another communication system provided by an embodiment of the present disclosure. With reference to FIG. 6, a terminal device 601, a satellite cluster 602, and a base station 603 are included. The wireless communication may be performed between the terminal device 601 and the satellite cluster 602, and communication may be performed between the satellite cluster 602 and the base station 603. The network formed between the terminal device 601, the satellite cluster 602, and the base station 603 may also be referred to as an NTN. In the architecture of the communication system illustrated in FIG. 6, the satellite cluster may not have the function of the base station, and communication between the terminal device and the base station needs to be relayed by the satellite cluster. In this system architecture, the base station may be referred to as a network device. In some embodiments of the present disclosure, the communication system may include multiple satellite clusters, and/or one network device may be associated with one or more satellite clusters, and/or may include multiple network devices, and/or another number of terminal devices may be included within the coverage of each network device, which are not limited by the embodiments of the present disclosure.

It should be noted that FIGS. 1 to 6 only illustrate the systems applicable to the present disclosure in the form of examples, and of course, the methods illustrated in the embodiments of the present disclosure can also be applied to other systems. Further, the terms "system" and "network" in the present disclosure are often used interchangeably. The term "and/or" in the present disclosure is only used to describe an association relationship between associated objects, indicating that there may be three relationships. For example, A and/or B may mean that A alone exists, A and B simultaneously exist, and B alone exists. In addition, the character "/" herein generally indicates that the associated objects are in an "or" relationship. It should also be understood that the "indication/indicate/indicating" mentioned in the embodiments of the present disclosure may be a direct indication, an indirect indication, or an associated relationship. For example, A indicates B, which may mean that A directly indicates B, for example, B can be acquired through A; or may mean that A indicates B indirectly, for example, A indicates C, and B can be acquired through C; or may mean that there is an association relationship between A and B. It should also be understood that "correspondence/correspond/corresponding" mentioned in the embodiments of the present disclosure may indicate that there is a direct correspondence or indirect correspondence between the two, or may indicate that there is an association relationship between the two, or may indicate a relationship between indicating and being indicated, configuring and being configured, or the like. It should also be understood that the "predefinition/predefined" or "predefined rules" mentioned in the embodiments of the present disclosure may be implemented by pre-storing corresponding codes, tables, or other ways that can be used to indicate relevant information in devices (e.g., including terminal devices and network devices), and the present disclosure does not limit specific implementations thereof. For example, predefined may refer to being defined in a protocol. It should also be understood that in the embodiments of the present disclosure, the "protocol" may refer to a standard protocol in the field of communication, and may include, for example, an LTE protocol, an NR protocol, and related protocols applied in future communication systems, which are not limited by the present disclosure.

In order to facilitate understanding of the technical solutions of the embodiments of the present disclosure, the related technologies of the embodiments of the present disclosure will be described below, and the related technologies below as optional solutions can be arbitrarily combined with the technical solutions of the embodiments of the present disclosure, and all of them belong to the scope of protection of the embodiments of the present disclosure.

PUSCH transmission in the NR system includes dynamically scheduled PUSCH transmission and pre-configured PUSCH transmission.

For dynamically scheduled PUSCH transmission, the network device allocates time-domain resources and frequency-domain resources for PUSCH transmission to the terminal device on the uplink active bandwidth part (BWP) through downlink control information (DCI). For pre-configured PUSCH transmission, the network device allocates time-domain resources and frequency-domain resources for PUSCH transmission to the terminal device on the uplink active BWP through radio resource control (RRC).

For PUSCH time-domain resource allocation, the two manners including Type A and Type B are supported according to different demodulation reference signal (DMRS) mapping types. For Type A, the first DMRS is located at symbol 3 within the slot. For Type B, the first DMRS is located at symbol 1 of PUSCH. When the network device allocates the time-domain resources for PUSCH to the terminal device, it needs to indicate the following information: slot-level indication information K2 (slot-level offset from a physical downlink control channel (PDCCH) to the PUSCH), symbol-level indication information (starting symbol S and length L of the PUSCH), and mapping type (Type A or Type B). It can be understood that the length L of the PUSCH also indicates that the number of symbols of the PUSCH is L. Specifically, the above information is configured in the resource list through RRC signaling or a predefined manner, and then the time-domain resources for the PUSCH is indicated from the resource list through the frequency domain resource assignment (FDRA) field in the DCI. Table 1 gives an example of a predefined PUSCH time-domain resource list.

Table 1 Example of PUSCH time-domain resource list

| Resource ID | PUSCH mapping type | Slot-level indication information $K_2$ | Symbol-level indication information | |
|---|---|---|---|---|
| | | | Starting symbol S | Length L |
| 1 | Type A | 0 | 0 | 14 |
| 2 | Type A | 0 | 0 | 12 |
| 3 | Type A | 0 | 0 | 10 |
| 4 | Type B | 0 | 2 | 10 |
| 5 | Type B | 0 | 4 | 10 |
| 6 | Type B | 0 | 4 | 8 |
| 7 | Type B | 0 | 4 | 6 |
| 8 | Type A | 1 | 0 | 14 |
| 9 | Type A | 1 | 0 | 12 |
| 10 | Type A | 1 | 0 | 10 |
| 11 | Type A | 2 | 0 | 14 |
| 12 | Type A | 2 | 0 | 12 |
| 13 | Type A | 2 | 0 | 10 |
| 14 | Type B | 0 | 8 | 6 |
| 15 | Type A | 3 | 0 | 14 |
| 16 | Type A | 3 | 0 | 10 |

It should be noted that the method of "separately configuring the starting symbol S and the length L" illustrated in Table 1 is mainly used for a predefined "default time-domain resource allocation list" (i.e., default PUSCH TDRA). These default resource lists are often used in initial access procedures or in some resource scheduling that do not require high flexibility. For the resource list configured through RRC signaling, the starting symbol S and the length L are jointly encoded to save signaling overhead, that is, a single "starting and length indicator value" (SLIV) is used to express a pair of values for the starting symbol S and the length L. According to different requirements for scheduling flexibility and channel multiplexing, different PUSCH mapping types have different value ranges for S and L. Table 2 gives an example of value ranges for S and L corresponding to different PUSCH mapping types in the normal cyclic prefix (normal CP) scenario.

Table 2 Example of value ranges for S and L in PUSCH time-domain resource allocation

| Mapping Type | Value range for S | Value range for L |
|---|---|---|
| Type A | {0} | {4,...,14} |
| Type B | {0,...,13} | {1,...,14} |

In order to improve the transmission performance of PUSCH, repetition of PUSCH in the time domain is also supported. Here, the repetition of the PUSCH in the time domain may occur within a slot or across multiple slots.

In the NTN system, in order to enhance the uplink coverage of the cell, a PUSCH is usually transmitted with repetition. For example, one PUSCH is repeated N1 times in the time domain. Since one PUSCH needs to be repeatedly transmitted N1 times, the occupied uplink resources are N1 times those occupied when the PUSCH is transmitted without repetition, which will lead to a reduction in the uplink capacity of the system. How to improve the uplink capacity of the system while meeting the uplink coverage requirements is a problem to be solved.

In order to facilitate understanding of the technical solutions of the embodiments of the present disclosure, the technical solutions of the present disclosure will be described in detail below with reference to specific embodiments. The above related technologies as optional solutions can be arbitrarily combined with the technical solutions of the embodiments of the present disclosure, and all of them belong to the scope of protection of the embodiments of the present disclosure. Embodiments of the present disclosure include at least part of the following.

As illustrated in FIG. 7, a method for channel transmission provided by an embodiment of the present disclosure is applied to a terminal device, and includes operations S701 and S702.

At S701, the terminal device receives first indication information transmitted by a network device, here, the first indication information is used for determining that a first PUSCH is transmitted in a time domain in a manner of orthogonal cover code (OCC) spreading.

At S702, the terminal device spreads the first PUSCH in the time domain in the manner of OCC spreading, and transmits the first PUSCH to the network device.

In a case where the terminal device receives the first indication information transmitted by the network device, and determines, based on the first indication information, to transmit the first PUSCH in the time domain in the manner of OCC spreading, the terminal device spreads the first PUSCH in the time domain in the manner of OCC spreading, and transmits the spread first PUSCH to the network device. In some embodiments, spreading the first PUSCH in the time domain in the manner of OCC spreading includes: on the same RE occupied by the first PUSCH, scrambling data symbols that are located at different time-domain positions and carry the same information by using different OCC factors in an OCC.

In some embodiments, the first indication information may be used to determine that the PUSCH is transmitted in the time domain in the manner of OCC spreading. The first PUSCH is any PUSCH transmitted after receiving the first indication information; or the first PUSCH is any PUSCH, corresponding to a first DCI format, transmitted after receiving the first indication information.

In some embodiments, the first indication information may be used to determine that the PUSCH is transmitted in the time domain in the manner of OCC spreading. After the terminal device receives the first indication information, for a PUSCH corresponding to the first DCI format, the terminal device transmits the PUSCH in the time domain in the manner of OCC spreading; and/or, for a PUSCH not corresponding to the first DCI format, the terminal device transmits the PUSCH without time-domain OCC spreading.

Exemplarily, the first DCI format includes DCI format 0_1. After the terminal device receives the first indication information, for a PUSCH scheduled by the DCI format 0_1, the terminal device transmits the PUSCH in the time domain in the manner of OCC spreading; for a PUSCH scheduled by DCI format 0_0, the terminal device transmits the PUSCH without time-domain OCC spreading.

It can be understood that in the embodiments of the present disclosure, the OCC spreading may be replaced by OCC multiplexing. That is, the first PUSCH is transmitted by OCC multiplexing.

It will be appreciated that OCC may also be referred to as an orthogonal code.

In the method for channel transmission according to the embodiment of the present disclosure, based on the first indication information transmitted by the network device, the terminal device spreads the PUSCH to be transmitted by the terminal device in the time domain in the manner of OCC spreading, thereby improving the uplink capacity of the system while ensuring the uplink coverage requirements.

In some embodiments, the terminal device spreads the first PUSCH in the time domain in the manner of OCC spreading, which includes the following operation.

The terminal device spreads the first PUSCH in the time domain in the manner of OCC spreading, based on one or more of: a time-domain unit size for time-domain OCC spreading; an interval between data symbols associated with two adjacent OCC factors; a first OCC, where the first OCC is an OCC used for the time-domain OCC spreading; a first OCC length, where the first OCC length is a length of the first OCC; a first OCC set, where the first OCC set is an OCC set associated with the first OCC length; a first OCC index, where the first OCC index is used for indicating the first OCC; or a first DMRS port, where the first DMRS port is a DMRS port associated with the first OCC index.

In some embodiments, the time-domain unit size for the time-domain OCC spreading includes one of: N PUSCHs, where N is the first OCC length or N is 1; or, M data symbols, where M is an integer multiple of N.

In some embodiments, the time-domain unit size for the time-domain OCC spreading is N PUSCHs, the number of repetitions of the first PUSCH in the time domain is P, and P is an integer multiple of N.

In some embodiments, the time-domain unit size for the time-domain OCC spreading is M data symbols, the number of data symbols included in one PUSCH of the first PUSCH is Q, and Q is an integer multiple of M.

It is noted that the number M of data symbols is the number of data symbols excluding DMRS symbols.

In some embodiments, data symbols occupied by transmission of the first PUSCH include one or more time-domain units for the time-domain OCC spreading.

In some embodiments, the time-domain unit size for the time-domain OCC spreading is N PUSCHs, and the number of repetitions of the first PUSCH in the time domain includes an integer number of time-domain units for the time-domain OCC spreading.

For example, if the time-domain unit size for the time-domain OCC spreading is 4 PUSCHs, and the number of repetitions of the first PUSCH in the time domain is 4, then the data symbols occupied by the 4 repetitions of the first PUSCH in the time domain include 1 time-domain unit for the time-domain OCC spreading.

For example, if the time-domain unit size for the time-domain OCC spreading is 2 PUSCHs, and the number of repetitions of the first PUSCH in the time domain is 8, then the data symbols occupied by the 8 repetitions of the first PUSCH in the time domain include 4 time-domain units for the time-domain OCC spreading.

In some embodiments, the time-domain unit size for the time-domain OCC spreading is M data symbols, and one PUSCH of the first PUSCH includes an integer number of time-domain units for the time-domain OCC spreading.

For example, if the time-domain unit size for the time-domain OCC spreading is 2 data symbols, and the number Q of data symbols corresponding to one PUSCH of the first PUSCH is 10, then the data symbols occupied by transmission of the first PUSCH include 5 time-domain units for the time-domain OCC spreading.

For example, if the time-domain unit size for the time-domain OCC spreading is 4 data symbols, and the number Q of data symbols corresponding to one PUSCH of the first PUSCH is 12, the data symbols occupied by transmission of the first PUSCH include 3 time-domain units for the time-domain OCC spreading.

In some embodiments, the OCC factor of an OCC having an OCC index of $i$ and a length of N may be represented by $w_i(m)$, where $m$ ranges from 0 to N-1. It can be understood that when the values of $m$ are adjacent integers, they can represent two adjacent OCC factors. Exemplarily, $w_i(0)$ and $w_i(1)$ are two adjacent OCC factors, $w_i(1)$ and $w_i(2)$ are two adjacent OCC factors.

In some embodiments, the interval between the data symbols associated with the two adjacent OCC factors includes one of: the interval between the data symbols associated with the two adjacent OCC factors is 1; the interval between the data symbols associated with the two adjacent OCC factors is 2; the interval between the data symbols associated with the two adjacent OCC factors is 4; the interval between the data symbols associated with the two adjacent OCC factors is the number of data symbols included in one PUSCH; or the interval between the data symbols associated with the two adjacent OCC factors is a ratio of the number of data symbols included in the one PUSCH to the first OCC length.

It can be understood that the data symbols associated with the OCC factor are symbols for data transmission.

It can be understood that the OCC length is also referred to as OCC spreading coefficient or scrambling coefficient.

For example, the time-domain unit size for the time-domain OCC spreading is 1 PUSCH, the 1 PUSCH includes 12 data symbols, and the first OCC length is 4, in this case, the interval between the data symbols associated with the two adjacent OCC factors is 3 (i.e., the ratio of 12 to 4).

For example, the time-domain unit size for the time-domain OCC spreading is 2 PUSCHs, where each PUSCH includes 10 data symbols, in this case, the interval between the data symbols associated with the two adjacent OCC factors is the number 10 of data symbols included in one PUSCH.

In some embodiments, one OCC length is associated with one OCC set. Exemplarily, the first OCC length is associated with the first OCC set.

In some embodiments, the first OCC is an OCC, used for the time-domain OCC spreading, corresponding to the first PUSCH; and the length of the first OCC is the first OCC length. Here, the first OCC is an OCC determined from the first OCC set based on the first OCC index.

In some embodiments, the first OCC length is 2, and the first OCC set is: {{+1, +1}, {+1, -1}}.

It can be understood that each OCC in the first OCC set is associated with an OCC index, or an OCC index is used to determine an OCC in the first OCC set. Exemplarily, Table 3 gives an example of an OCC set when the first OCC length is 2 and the first OCC set is {{+1, +1}, {+1, -1}}. In the example of Table 3, if the first OCC index is 0, the first OCC may be determined to be {+1, +1} from the first OCC set. If the first OCC index is 1, the first OCC may be determined to be {+1, -1} from the first OCC set.

Table 3 Example of the first OCC set

| OCC index | OCC |
|---|---|
| 0 | {+1, +1} |
| 1 | {+1, -1} |

In some embodiments, the first OCC length is 4, and the first OCC set is one of: {{+1, +1, +1, +1}, {+1, -1, +1, -1}, {+1, +1, -1, -1}, {+1, -1, -1, +1}}; or {{+1, +1, +1, +1}, {+1, -j, -1, +j}, {+1, -1, +1, -1}, {+1, +j, -1, -j}}.

Exemplarily, Table 4 gives an example of an OCC set when the first OCC length is 4 and the first OCC set is {{+1, +1, +1, +1}, {+1, -1, +1, -1}, {+1, +1, -1, -1}, {+1, -1, -1, +1}}. In the example of Table 4, if the first OCC index is 0, the first OCC may be determined to be {+1, +1, +1, +1} from the first OCC set. If the first OCC index is 1, the first OCC may be determined to be {+1, -1, +1, -1} from the first OCC set. If the first OCC index is 2, the first OCC may be determined to be {+1, +1, -1, -1} from the first OCC set. If the first OCC index is 3, the first OCC may be determined to be {+1, -1, -1, +1} from the first OCC set.

Table 4 Example of the first OCC set

| Index | Orthogonal code |
|---|---|
| 0 | {+1, +1, +1, +1} |
| 1 | {+1, -1, +1, -1} |
| 2 | {+1, +1, -1, -1} |
| 3 | {+1, -1, -1, +1} |

Exemplarily, Table 5 gives an example of an OCC set when the first OCC length is 4 and the first OCC set is {{+1, +1, +1, +1}, {+1, -j, -1, +j}, {+1, -1, +1, -1}, {+1, +j, -1, -j}}. In the example of Table 5, if the first OCC index is 0, the first OCC may be determined to be {+1, +1, +1, +1} from the first OCC set. If the first OCC index is 1, the first OCC may be determined to be {+1, -j, -1, +j} from the first OCC set. If the first OCC index is 2, the first OCC may be determined to be {+1, -1, +1, -1} from the first OCC set. If the first OCC index is 3, the first OCC may be determined to be {+1, +j, -1, -j} from the first OCC set.

Table 5 Example of the first OCC set

| Index | Orthogonal code |
|---|---|
| 0 | {+1, +1, +1, +1} |
| 1 | {+1, -j, -1, +j} |
| 2 | {+1, -1, +1, -1} |
| 3 | {+1, +j, -1, -j} |

In some embodiments, the first OCC length is N, and the first OCC set is determined according to the following formula:

$$w_i(m) = e^{j2\pi\phi(m)/N} \ .$$

Herein, *i* denotes an OCC index in the first OCC set, *i* ranges from 0 to N-1, $w_i(m)$ denotes an *m-th* OCC factor included in an *i-th* OCC, *m* ranges from 0 to N-1, and $\phi(m)$ is a preset value determined based on *i* and N.

Exemplarily, Table 6 gives an example of the values of $\phi(m)$ in an OCC set when the first OCC length is N and the first OCC set is $w_i(m) = e^{j2\pi\phi(m)/N}$, where the value of N may be one from 1 to 7. In the example of Table 6, taking the value of N being 3 as an example, if the first OCC index is 0, the first OCC may be determined to be $w_i(m) = e^{j2\pi\phi(m)/3}$ from the first OCC set, i.e., $\{e^{j2\pi\phi(0)/3}, e^{j2\pi\phi(1)/3}, e^{j2\pi\phi(2)/3}\}$, where $\phi(0) = 0$, $\phi(I) = 0$, and $\phi(2) = 0$. If the first OCC index is 1, the first OCC may be determined to be $w_i(m) = e^{j2\pi\phi(m)/3}$ from the first OCC set, i.e., $\{e^{j2\pi\phi(0)/3}, e^{j2\pi\phi(1)/3}, e^{j2\pi\phi(2)/3}\}$, where $\phi(0) = 0$, $\phi(1) = 1$, and $\phi(2) = 2$. If the first OCC index is 2, the first OCC may be determined to be $w_i(m) = e^{j2\pi\phi(m)/3}$ from the first OCC set, i.e., $\{e^{j2\pi\phi(0)/3}, e^{j2\pi\phi(1)/3}, e^{j2\pi\phi(2)/3}\}$, where $\phi(0) = 0$, $\phi(1) = 2$, and $\phi(2) = 1$. If the value of N is another value, the OCC in the corresponding OCC set may be determined according to the above method, which will not be repeated here.

Table 6 Example of values of $\phi(m)$ in the first OCC set

| N | $\varphi$ | | | | | | |
|---|---|---|---|---|---|---|---|
| | *i* = 0 | *i* = 1 | *i* = 2 | *i* = 3 | *i* = 4 | *i* = 5 | *i* = 6 |
| 1 | [0] | - | - | - | - | - | - |
| 2 | [0 0] | [0 1] | - | - | - | - | - |
| 3 | [0 0 0] | [0 1 2] | [0 2 1] | - | - | - | - |
| 4 | [0 0 0 0] | [0 2 0 2] | [0 0 2 2] | [0 2 2 0] | - | - | - |
| 5 | [0 0 0 0 0] | [0 1 23 4] | [0 2 4 1 3] | [0 3 1 4 2] | [0 4 3 2 1] | - | - |
| 6 | [0 0 0 0 0 0] | [0 1 2 3 4 5] | [0 2 4 0 2 4] | [0 3 0 3 0 3] | [0 4 2 0 4 2] | [0 5 4 3 2 1] | - |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

In the following, by taking the case where the time-domain unit size for the time-domain OCC spreading is N PUSCHs and N is the first OCC length as an example, the exemplary illustration of scrambling the data symbols in the N PUSCHs with different OCC factors in the first OCC is provided.

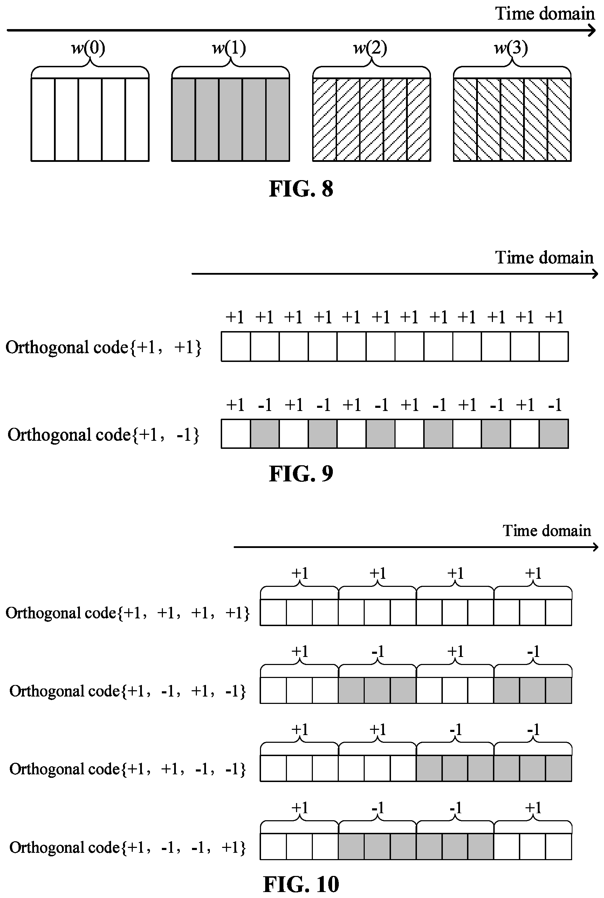

Exemplarily, FIG. 8 illustrates a diagram of spreading over N PUSCHs using the first OCC in a case where the interval between the data symbols associated with the two adjacent OCC factors is the number of data symbols included in one PUSCH. As illustrated in FIG. 8, the value of N is 4, the first OCC is {w(0), w(1), w(2), w(3)}, the first PUSCH includes N PUSCH repetitions, and 5 data symbols are occupied for each PUSCH repetition, then all data symbols in the first PUSCH repetition are scrambled with the OCC factor {w(0)}, all data symbols in the second PUSCH repetition are scrambled with the OCC factor {w(1)}, all data symbols in the third PUSCH repetition are scrambled with the OCC factor {w(2)}; and all data symbols in the fourth PUSCH repetition are scrambled with the OCC factor {w(3)}. In this case, the k-th data symbol in each PUSCH repetition carries the same information, where k takes values of 0, 1, 2, 3, and 4.

In the following, by taking the case where the time-domain unit size for the time-domain OCC spreading is one PUSCH and this PUSCH includes 12 data symbols as an example, the exemplary illustrations of scrambling the data symbols in one PUSCH with different OCC factors in the first OCC are provided.

Exemplarily, FIG. 9 illustrates a diagram of spreading over one PUSCH using an OCC in the first OCC set illustrated in Table 3 in a case where the interval between the data symbols associated with the two adjacent OCC factors is 1. As illustrated in FIG. 9, if the first OCC is {+1, +1}, all data symbols in the PUSCH are scrambled with the OCC factor {+1}; if the first OCC is {+1, -1}, the even-numbered data symbols in the PUSCH are scrambled with the OCC factor {+1}, and the odd-numbered data symbols in the PUSCH are scrambled with the OCC factor {-1}. In this case, the k-th data symbol in the PUSCH carries the same information as the (k+1)-th data symbol, where k takes values of 0, 2, 4, 6, 8, and 10.

Exemplarily, FIG. 10 illustrates a diagram of spreading over one PUSCH using an OCC in the first OCC set illustrated in Table 4 in a case where the interval between the data symbols associated with the two adjacent OCC factors is 3. As illustrated in FIG. 10, if the first OCC is {+1, +1, +1, +1}, all data symbols in the PUSCH are scrambled with the OCC factor {+1}; if the first OCC is {+1, -1, +1, -1}, the 0th, 1st, and 2nd data symbols in the PUSCH are scrambled with the OCC factor {+1}, the 3rd, 4th, and 5th data symbols are scrambled with the OCC factor {-1}, the 6th, 7th, and 8th data symbols are scrambled with the OCC factor {+1}, and the 9th, 10th, and 11th data symbols are scrambled with the OCC factor {-1}; if the first OCC is {+1, +1, -1, -1}, the 0th, 1st, and 2nd data symbols in the PUSCH are scrambled with the OCC factor {+1}, the 3rd, 4th, and 5th data symbols are scrambled with the OCC factor {+1}, the 6th, 7th, and 8th data symbols are scrambled with the OCC factor {-1}, and the 9th, 10th, and 11th data symbols are scrambled with the OCC factor {-1}; if the first OCC is {+1, -1, -1, +1}, the 0th, 1st, and 2nd data symbols in the PUSCH are scrambled with the OCC factor {+1}, the 3rd, 4th, and 5th data symbols are scrambled with the OCC factor {-1}, the 6th, 7th, and 8th data symbols are scrambled with the OCC factor {-1}, and the 9th, 10th, and 11th data symbols are scrambled with the OCC factor {+1}. In this case, the k-th data symbol, the (k+3)-th data symbol, the (k+6)-th data symbol, and the (k+9)-th data symbol in the PUSCH carry the same information, where k takes values of 0, 1, and 2.

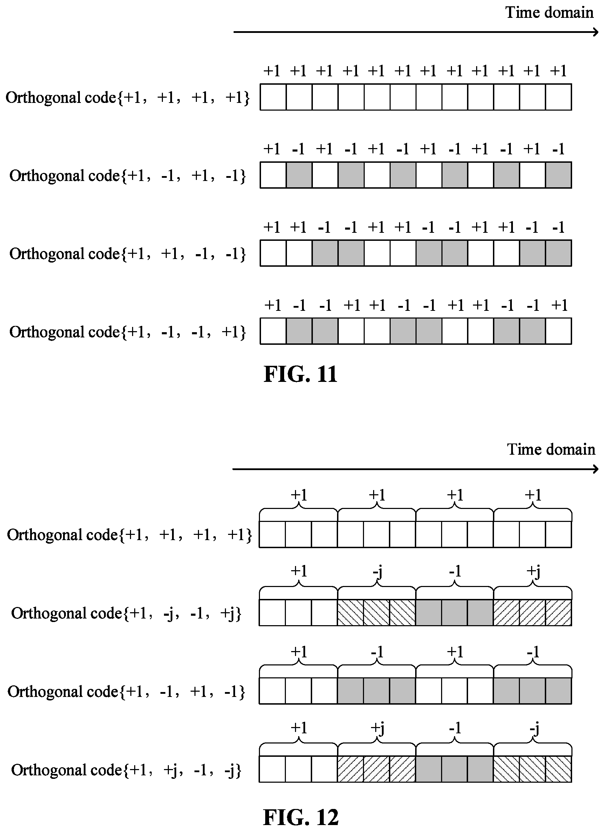

Exemplarily, FIG. 11 illustrates a diagram of spreading over one PUSCH using an OCC in the first OCC set illustrated in Table 4 in a case where the interval between the data symbols associated with the two adjacent OCC factors is 1. As illustrated in FIG. 11, if the first OCC is {+1, +1, +1, +1}, all data symbols in the PUSCH are scrambled with the OCC factor {+1}; if the first OCC is {+1, -1, +1, -1}, the 0th, 4th, and 8th data symbols in the PUSCH are scrambled with OCC factor {+1}, the 1st, 5th, and 9th data symbols are scrambled with the OCC factor {-1}, the 2nd, 6th, and 10th data symbols are scrambled with the OCC factor {+1}, and the 3rd, 7th, and 11th data symbols are scrambled with the OCC factor {-1}; if the first OCC is {+1, +1, -1, -1}, the 0th, 4th, and 8th data symbols in the PUSCH are scrambled with the OCC factor {+1}, the 1st, 5th, and 9th data symbols are scrambled with the OCC factor {+1}, the 2nd, 6th, and 10th data symbols are scrambled with the OCC factor {-1}, and the 3rd, 7th, and 11th data symbols are scrambled with the OCC factor {-1}; if the first OCC is {+1, -1, -1, +1}, the 0th, 4th, and 8th data symbols in the PUSCH are scrambled with the OCC factor {+1}, the 1st, 5th, and 9th data symbols are scrambled with the OCC factor {-1}, the 2nd, 6th, and 10th data symbols are scrambled with the OCC factor {-1}, and the 3rd, 7th, and 11th data symbols are scrambled with the OCC factor {+1}. In this case, the k-th data symbol, the (k+1)-th data symbol, the (k+2)-th data symbol and the (k+3)-th data symbol in the PUSCH carry the same information, where k takes values of 0, 4, and 8.

Exemplarily, FIG. 12 illustrates a diagram of spreading over one PUSCH using an OCC in the first OCC set illustrated in Table 5 in a case where the interval between the data symbols associated with the two adjacent OCC factors is 3. As illustrated in FIG. 12, if the first OCC is {+1, +1, +1, +1}, all data symbols in the PUSCH are scrambled with the OCC factor {+1}; if the first OCC is {+1, -j, -1, +j}, the 0th, 1st, and 2nd data symbols in the PUSCH are scrambled with the OCC factor {+1}, the 3rd, 4th, and 5th data symbols are scrambled with the OCC factor {-j}, the 6th, 7th, and 8th data symbols are scrambled with OCC factor {-1}, and the 9th, 10th, and 11th data symbols are scrambled with OCC factor {+ j}; if the first OCC is {+1, -1, +1, -1}, the 0th, 1st, and 2nd data symbols in the PUSCH are scrambled with the OCC factor {+1}, the 3rd, 4th, and 5th data symbols are scrambled with the OCC factor {-1}, the 6th, 7th, and 8th data symbols are scrambled with the OCC factor {+1}, and the 9th, 10th, and 11th data symbols are scrambled with the OCC factor {-1}; if the first OCC is {+1, +j, -1, -j}, the 0th, 1st, and 2nd data symbols in the PUSCH are scrambled with the OCC factor {+1}, the 3rd, 4th, and 5th data symbols are scrambled with the OCC factor {+j}, the 6th, 7th, and 8th data symbols are scrambled with the OCC factor {-1}, and the 9th, 10th, and 11th data symbols are scrambled with the OCC factor {-j}. In this case, the k-th data symbol, the (k+3)-th data symbol, the (k+6)-th data symbol, and the (k+9)-th data symbol in the PUSCH carry the same information, where k takes values of 0, 1, and 2.

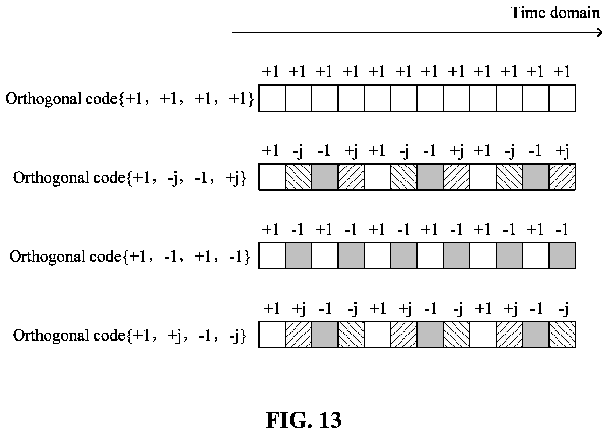

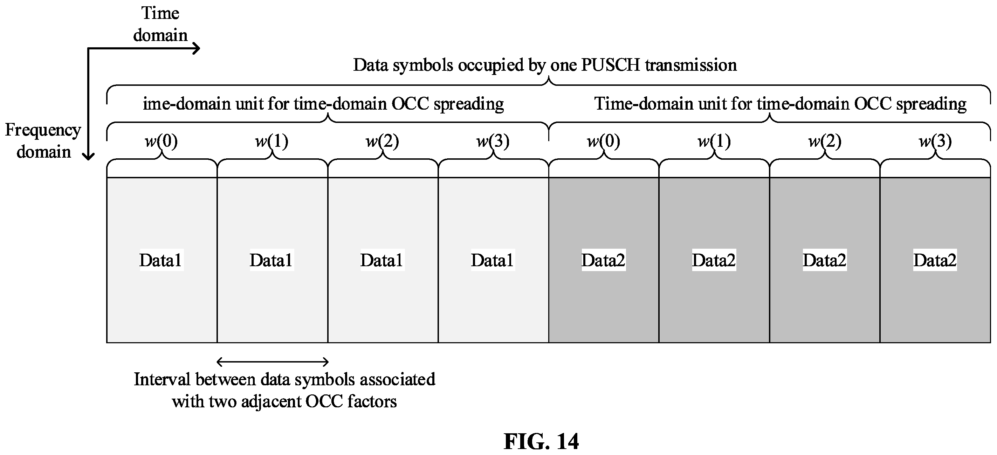

Exemplarily, FIG. 13 illustrates a diagram of spreading over one PUSCH using an OCC in the first OCC set illustrated in Table 5 in a case where the interval between the data symbols associated with the two adjacent OCC factors is 1. As illustrated in FIG. 14, if the first OCC is {+1, +1, +1, +1}, all data symbols in the PUSCH are scrambled with the OCC factor {+1}; if the first OCC is {+1, -j, -1, +j}, the 0th, 4th, and 8th data symbols in the PUSCH are scrambled with the OCC factor {+1}, the 1st, 5th, and 9th data symbols are scrambled with the OCC factor {-j}, the 2nd, 6th, and 10th data symbols are scrambled with the OCC factor {-1}, and the 3rd, 7th, and 11th data symbols are scrambled with the OCC factor {+j}; if the first OCC is {+1, -1, +1, -1}, the 0th, 4th, and 8th data symbols in the PUSCH are scrambled with the OCC factor {+1}, the 1st, 5th, and 9th data symbols are scrambled with the OCC factor {-1}, the 2nd, 6th, and 10th data symbols are scrambled with the OCC factor {+1}, and the 3rd, 7th, and 11th data symbols are scrambled with the OCC factor {-1}; if the first OCC is {+1, +j, -1, -j}, the 0th, 4th, and 8th data symbols in the PUSCH are scrambled with the OCC factor {+1}, the 1st, 5th, and 9th data symbols are scrambled with the OCC factor {+j}, the 2nd, 6th, and 10th data symbols are scrambled with the OCC factor {-1}, and the 3rd, 7th, and 11th data symbols are scrambled with the OCC factor {-j}. In this case, the k-th data symbol, the (k+1)-th data symbol, the (k+2)-th data symbol, and the (k+3)-th data symbol in the PUSCH carry the same information, where k takes values 0, 4, and 8.

In some embodiments, the first DMRS port is a DMRS port to which the first OCC is applied.

Exemplarily, the first PUSCH may be associated with one or more DMRS ports, where each DMRS port may be associated with one OCC.

In some embodiments, the terminal device spreads the first PUSCH in the time domain in the manner of OCC spreading, which includes the following operation.

The terminal device spreads the first PUSCH in the time domain in the manner of OCC spreading, based on the first OCC. Here, the first OCC is an OCC determined from the first OCC set based on the first OCC index.

Exemplarily, the terminal device determines the first OCC from the first OCC set corresponding to the first OCC length based on an indication of the first OCC index; and spreads the first PUSCH by means of OCC spreading in the time domain, using the first OCC.

In the following, by taking the case where the first OCC length N = 4 and the first OCC is {w(0), w(1), w(2), w(3)} as an example, the illustration of spreading the first PUSCH in the time domain in the manner of OCC spreading is provided. That is to say, on the same RE occupied by the first PUSCH, data symbols at different time-domain positions and carrying the same information are scrambled with the OCC factors {$w(0)$, $w(1)$, $w(2)$, $w(3)$} in the first OCC, respectively.

It can be understood that data symbols occupied by one PUSCH transmission are symbols that are not used for DMRS transmission among symbols allocated to the PUSCH transmission. For example, the first PUSCH includes 10 symbols, where the DMRS symbols are the 0th symbol and the 4th symbol, then the data symbols occupied by transmission of the first PUSCH are the 1st, 2nd, 3rd, 5th, 6th, 7th, 8th, and 9th symbols, that is, a total of 8 data symbols.

Exemplarily, data symbols occupied by one PUSCH transmission include multiple time-domain units for the time-domain OCC spreading, where the interval between the data symbols associated with the two adjacent OCC factors is a ratio of the number of data symbols included in a time-domain unit for the time-domain OCC spreading to the first OCC length N. FIG. 14 illustrates an example in which data symbols occupied by one PUSCH transmission include two time-domain units for the time-domain OCC spreading.

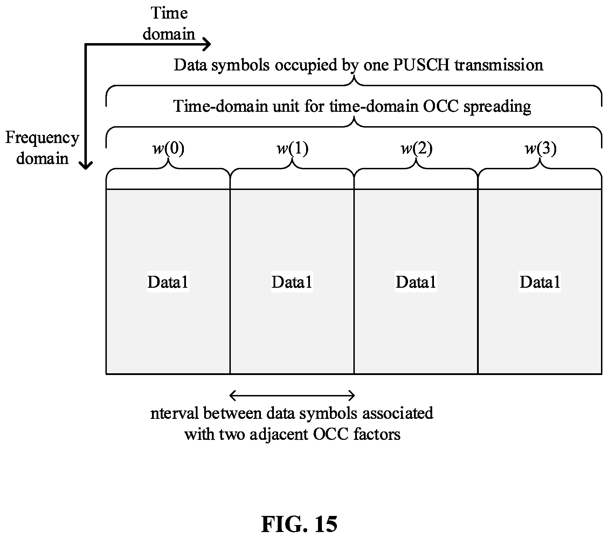

Exemplarily, data symbols occupied by one PUSCH transmission include one time-domain unit for the time-domain OCC spreading, where the interval between the data symbols associated with the two adjacent OCC factors is a ratio of the number of data symbols included in one PUSCH to the first OCC length N. FIG. 15 illustrates an example in which data symbols occupied by one PUSCH transmission include one time-domain unit for the time-domain OCC spreading.

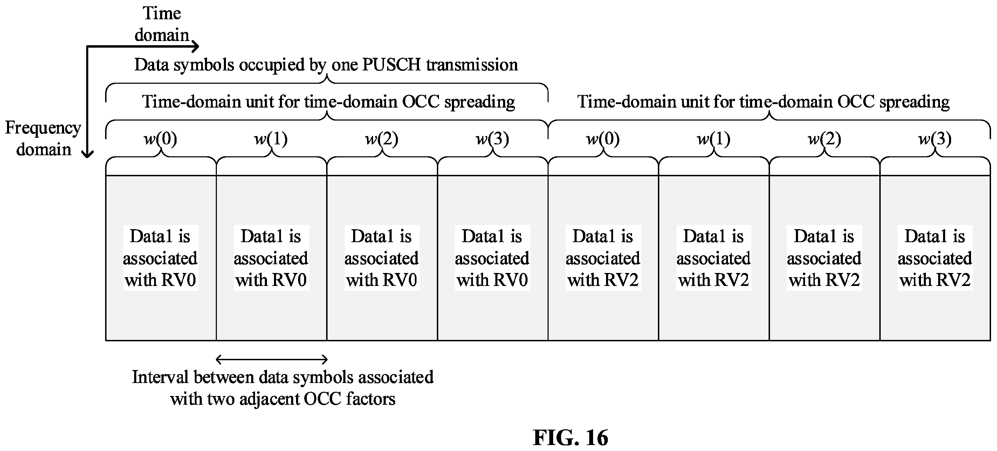

It should be noted that in a case where the data symbols occupied by one PUSCH transmission include one or more time-domain units for the time-domain OCC spreading (for example, the cases illustrated in FIGS. 14 and 15), if the first PUSCH corresponds to P repetitions, then redundancy versions (RVs) associated with the P repetitions may be the same or different. FIG. 16 illustrates an example in which the first PUSCH corresponds to 2 repetitions, and the RVs associated with the 2 repetitions are 0 and 2, respectively, where the data symbols occupied by one PUSCH transmission include one time-domain unit for the time-domain OCC spreading.

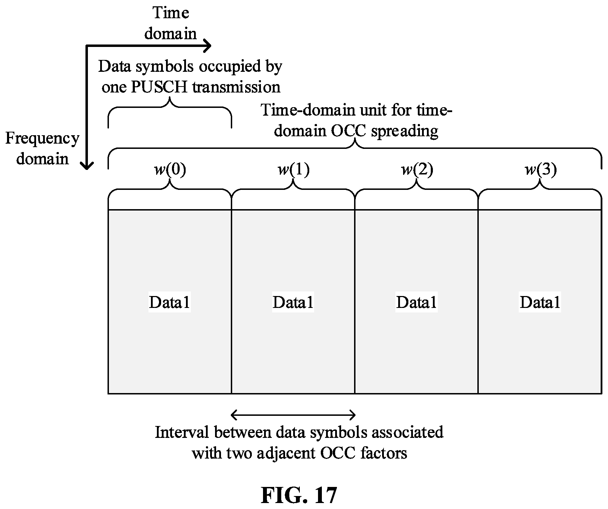

Exemplarily, data symbols occupied by one PUSCH transmission are associated with one spreading factor, that is, one time-domain unit for the time-domain OCC spreading includes data symbols occupied by N PUSCH transmissions, where the interval between the data symbols associated with the two adjacent OCC factors is the number of data symbols occupied by one PUSCH transmission. FIG. 17 illustrates an example in which one time-domain unit for the time-domain OCC spreading includes data symbols occupied by 4 PUSCH transmissions, and data symbols occupied by one PUSCH transmission are associated with one spreading factor.

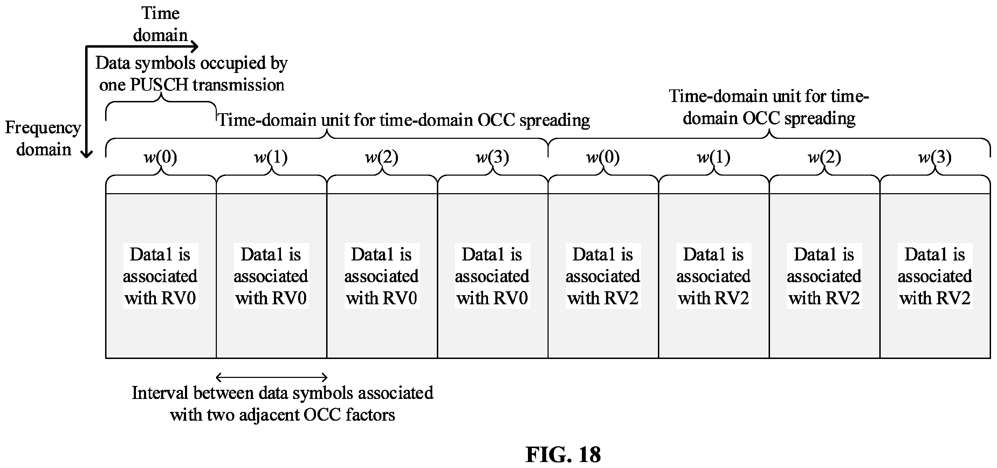

Exemplarily, in a case where data symbols occupied by one PUSCH transmission are associated with one spreading factor, that is, one time-domain unit for the time-domain OCC spreading includes data symbols occupied by N PUSCH transmissions, if the first PUSCH corresponds to P repetitions, and P is an integer multiple of N, then the RVs associated with every N repetitions in the P repetitions may be the same or different, where N is the first OCC length. FIG. 18 illustrates an example in which N = 4, P = 8, that is, the first PUSCH corresponds to 2 time-domain units for the time-domain OCC spreading, and the RVs associated with the 2 time-domain units for the time-domain OCC spreading are 0 and 2, respectively, where data symbols occupied by one PUSCH transmission are associated with one spreading factor.

In some embodiments, the time-domain unit size for the time-domain OCC spreading is predefined.

In some embodiments, the interval between the data symbols associated with the two adjacent OCC factors is predefined.

In some embodiments, the first OCC length is predefined.

In some embodiments, the first OCC set is predefined.

In some embodiments, the first OCC index is predefined.

In some embodiments, the first DMRS port is predefined.

In some embodiments, the first indication information is used to determine one or more of: whether time-domain OCC spreading is enabled; a time-domain unit size for the time-domain OCC spreading; an interval between data symbols associated with two adjacent OCC factors; a first OCC, where the first OCC is an OCC used for the time-domain OCC spreading; a first OCC length, where the first OCC length is a length of the first OCC; a first OCC set, where the first OCC set is an OCC set associated with the first OCC length; a first OCC index, where the first OCC index is used to indicate the first OCC; or a first DMRS port, where the first DMRS port is a DMRS port associated with the first OCC index.

Exemplarily, the first indication information is used to indicate one or more of: whether time-domain OCC spreading is enabled; a time-domain unit size for the time-domain OCC spreading; an interval between data symbols associated with two adjacent OCC factors; a first OCC; a first OCC length; a first OCC set; a first OCC index; or a first DMRS port.

It is to be understood that the indication in the embodiments of the present disclosure includes explicit indication and implicit indication.

Exemplarily, the first indication information is used to determine the first DMRS port, which includes that: the first indication information indicates an association relationship between the first OCC index and the first DMRS port, and the terminal device determines the first DMRS port based on the association relationship between the first OCC index and the first DMRS port.

In some embodiments, if the first indication information is configured to enable the time-domain OCC spreading, the first indication information is used to determine that the first PUSCH is transmitted in the time domain in the manner of OCC spreading; or, if the first indication information is not configured to enable the time-domain OCC spreading or the first indication information is configured to disable the time-domain OCC spreading, the first indication information is used to determine that the first PUSCH is transmitted in the time domain without the OCC spreading.

When the network device configures the first indication information and/or the first indication information indicates that the time-domain OCC spreading is enabled, it indicates that the first indication information is used to determine that the first PUSCH is transmitted in the time domain in the manner of OCC spreading, and the terminal device transmits the first PUSCH in the manner of the time-domain OCC spreading. Alternatively, when the network device does not configure the first indication information or the network device configures the first indication information and the first indication information indicates that the time-domain OCC spreading is disabled or not enabled, it indicates that the first indication information is used to determine that the first PUSCH is transmitted in the time domain without the time-domain OCC spreading, and the terminal device transmits the first PUSCH without the time-domain OCC spreading.

In some embodiments, the first indication information is used to determine that the first PUSCH is transmitted in the time domain in the manner of OCC spreading, if the first indication information indicates one or more of: the time-domain unit size for the time-domain OCC spreading; the interval between the data symbols associated with the two adjacent OCC factors; the first OCC; the first OCC length; the first OCC set; the first OCC index; or the first DMRS port.

It can be understood that when the first indication information transmitted by the network device is used to indicate one or more of the above-described information, the first indication information is used to implicitly indicate that the first PUSCH is transmitted in the time domain in the manner of OCC spreading, and accordingly, after receiving the first indication information, the terminal device transmits the first PUSCH in the manner of the time-domain OCC spreading.

In some embodiments, if the first indication information does not indicate the time-domain unit size for the time-domain OCC spreading, the time-domain unit size for the time-domain OCC spreading is predefined.

Exemplarily, when the first indication information indicates the time-domain unit size for the time-domain OCC spreading, the terminal device determines the time-domain unit size for the time-domain OCC spreading based on the first indication information, otherwise, the terminal device determines that the time-domain unit size for the time-domain OCC spreading is a predefined value or the terminal device determines the time-domain unit size for the time-domain OCC spreading based on a predefined rule.

Exemplarily, the time-domain unit size for the time-domain OCC spreading is 1 PUSCH or N data symbols, where N is the first OCC length.

Exemplarily, the time-domain unit size for the time-domain OCC spreading is determined based on a PUSCH mapping type.

Exemplarily, when the PUSCH mapping type corresponding to the first PUSCH is Type A, the time-domain unit size for the time-domain OCC spreading is N data symbols.

Exemplarily, when the PUSCH mapping type corresponding to the first PUSCH is Type B, the time-domain unit size for the time-domain OCC spreading is 1 PUSCH.

In some embodiments, if the first indication information does not indicate the interval between the data symbols associated with the two adjacent OCC factors, the interval between the data symbols associated with the two adjacent OCC factors is predefined.

Exemplarily, when the first indication information indicates the interval between the data symbols associated with the two adjacent OCC factors, the terminal device determines the interval between the data symbols associated with the two adjacent OCC factors based on the first indication information, otherwise, the terminal device determines that the interval between the data symbols associated with the two adjacent OCC factors is a predefined value or the terminal device determines the interval between the data symbols associated with the two adjacent OCC factors based on a predefined rule. For example, the interval between the data symbols associated with the two adjacent OCC factors is predefined to be 1 in a protocol.

In some embodiments, if the first indication information does not indicate the first OCC length, the first OCC length is predefined.

Exemplarily, when the first indication information indicates the first OCC length, the terminal device determines the first OCC length based on the first indication information, otherwise, the terminal device determines that the first OCC length is a predefined value or the terminal device determines the first OCC length based on a predefined rule. For example, the first OCC length is predefined to be 4 in a protocol.

In some embodiments, if the first indication information does not indicate the first OCC set, the first OCC set is predefined.

Exemplarily, when the first indication information indicates the first OCC set, the terminal device determines the first OCC set based on the first indication information, otherwise, the terminal device determines that the first OCC set is a predefined set or the terminal device determines the first OCC set based on a predefined rule. For example, the first OCC set is predefined in a protocol.

Exemplarily, the first OCC set includes at least one of the OCC sets illustrated in Tables 3, 4, 5, and 6.

In some embodiments, if the first indication information does not indicate the first OCC index, the first OCC index is predefined.

Exemplarily, when the first indication information indicates the first OCC index, the terminal device determines the first OCC index based on the first indication information, otherwise, the terminal device determines the first OCC index based on a predefined rule.

In some embodiments, if the first indication information does not indicate the first DMRS port, the first DMRS port is predefined.

Exemplarily, when the first indication information indicates the first DMRS port, the terminal device determines an association relationship between the first DMRS port and the first OCC index based on the first indication information, otherwise, the terminal device determines the association relationship between the first DMRS port and the first OCC index based on a predefined rule. For example, if the first OCC length is 2, and the number of layers for the first PUSCH transmitted by the terminal device is 2, that is, the first PUSCH is associated with two DMRS ports, then the first OCC in the first OCC set with the OCC length of 2 is applied to the first layer, and the second OCC in the first OCC set with the OCC length of 2 is applied to the second layer.

In some embodiments, the method further includes that: the terminal device determines a size of a first transport block (TB) transmitted in the first PUSCH, based on one or more of: a first OCC length, where the first OCC length is a length of a first OCC, and the first OCC is an OCC used for time-domain OCC spreading; the number of physical resource blocks (PRBs) occupied by transmission of the first PUSCH; the number of data symbols in a time slot occupied by the transmission of the first PUSCH; or the number of time slots occupied by the transmission of the first PUSCH.

The size of the first TB is determined based on a size of the first TB in the frequency domain and a size of the first TB in the time domain.

In some embodiments, the size of the first TB is determined based on the number of resource elements (REs) occupied by the first TB, where the number of REs occupied by the first TB is determined based on at least one of: the number of PRBs occupied by the transmission of the first PUSCH, the number of data symbols in the time slot occupied by the transmission of the first PUSCH, the number of time slots occupied by the transmission of the first PUSCH, or the first OCC length.

In some embodiments, in a case where the data symbols occupied by one PUSCH transmission include one or more time-domain units for the time-domain OCC spreading, the number of REs occupied by the first TB is determined based on the number of PRBs occupied by the transmission of the first PUSCH, the number of data symbols in the time slot occupied by the transmission of the first PUSCH, the number of time slots occupied by the transmission of the first PUSCH, and the first OCC length. For example, the number of REs occupied by the first TB is the number of PRBs occupied by the transmission of the first PUSCH * the number of data symbols in the time slot occupied by the transmission of the first PUSCH * the number of time slots occupied by the transmission of the first PUSCH /the first OCC length. Exemplarily, if the number of PRBs occupied by the transmission of the first PUSCH is 5, the number of data symbols in the time slot occupied by the transmission of the first PUSCH is 10, the number of time slots occupied by the transmission of the first PUSCH is 1, and the first OCC length is 4, then the number of REs occupied by the first TB transmitted in the first PUSCH is 5*12*10*1/4 = 150. Accordingly, the terminal device may determine the size of the first TB based on 150 REs.

Exemplarily, if the number of PRBs occupied by the transmission of the first PUSCH is 5, the number of data symbols in the time slot occupied by the transmission of the first PUSCH is 10, the number of time slots occupied by the transmission of the first PUSCH is 2, and the first OCC length is 4, then the number of REs occupied by the first TB transmitted in the first PUSCH is 5*12*10*2/4 = 300. Accordingly, the terminal device may determine the size of the first TB based on 300 REs.

In some embodiments, in a case where one time-domain unit for the time-domain OCC spreading includes data symbols occupied by N PUSCH transmissions, the number of REs occupied by the first TB is determined based on the number of PRBs occupied by the transmission of the first PUSCH, the number of data symbols in the time slot occupied by the transmission of the first PUSCH, and the number of time slots occupied by the transmission of the first PUSCH, where N is the first OCC length. For example, the number of REs occupied by the first TB is the number of PRBs occupied by the transmission of the first PUSCH * the number of data symbols in the time slot occupied by the transmission of the first PUSCH * the number of time slots occupied by the transmission of the first PUSCH.

Exemplarily, if the number of PRBs occupied by the transmission of the first PUSCH is 2, the number of data symbols in the time slot occupied by the transmission of the first PUSCH is 10, and the number of time slots occupied by the transmission of the first PUSCH is 1, then the number of REs occupied by the first TB transmitted in the first PUSCH is 2*12*10*1 = 240. Accordingly, the terminal device may determine the size of the first TB based on 240 REs.

In some embodiments, the number of time slots occupied by the transmission of the first PUSCH is 1.

In some embodiments, the first indication information is used to indicate one or more of: the number of PRBs occupied by the transmission of the first PUSCH; the number of data symbols in the time slot occupied by the transmission of the first PUSCH; or the number of time slots occupied by the transmission of the first PUSCH.

Exemplarily, the first indication information is used to determine the number of time slots occupied by the first TB transmitted in the first PUSCH. For example, if the first indication information indicates that 4 time slots are occupied by the first TB, then the terminal device determines the size of the first TB based on the number of REs used for the transmission of the first PUSCH within the 4 time slots. For another example, if the first indication information indicates that 2 time slots are occupied by the first TB, then the terminal device determines the size of the first TB based on the number of REs used for the transmission of the first PUSCH within the 2 time slots.

In some embodiments, if the first indication information does not indicate the number of time slots occupied by the transmission of the first PUSCH, the number of time slots occupied by the transmission of the first PUSCH is 1.

Exemplarily, when the first indication information indicates the number of time slots occupied by the transmission of the first PUSCH, the terminal device determines the number of time slots occupied by the transmission of the first PUSCH based on the first indication information, otherwise, the terminal device determines that the number of time slots occupied by the transmission of the first PUSCH is 1.

In some embodiments, the first indication information is transmitted through radio resource control (RRC) signaling; or, the first indication information is transmitted through downlink control information (DCI); or, a part of the first indication information is transmitted through an RRC signaling, and a part of the first indication information is transmitted through a DCI.

Exemplarily, all information in the first indication information is transmitted through an RRC signaling.

Exemplarily, all information in the first indication information is transmitted through a DCI.

Exemplarily, a part of the first indication information is transmitted through an RRC signaling, and another part of the first indication information is transmitted through a DCI.

For example, if the first indication information includes indication information of whether the time-domain OCC spreading is enabled, the indication information of whether the time-domain OCC spreading is enabled is carried in the RRC signaling. For another example, if the first indication information includes indication information of the time-domain unit size for the time-domain OCC spreading, the indication information of the time-domain unit size for the time-domain OCC spreading is carried in the RRC signaling. For another example, if the first indication information includes indication information of the interval between the data symbols associated with the two adjacent OCC factors, the indication information of the interval between the data symbols associated with the two adjacent OCC factors is carried in the RRC signaling. For another example, if the first indication information includes indication information of the first OCC set, the indication information of the first OCC set is carried in the RRC signaling. For another example, if the first indication information includes indication information of the first OCC length, the indication information of the first OCC length is carried in the RRC signaling or the DCI. For another example, if the first indication information includes indication information of the first OCC index, the indication information of the first OCC index is carried in the DCI. For another example, if the first indication information includes indication information of the first DMRS port, the indication information of the first DMRS port is carried in the DCI.

Exemplarily, the information, for determining the first OCC index and/or the first DMRS port, in the first indication information is carried in the DCI; and the information, for determining information other than the first OCC index and the first DMRS port, in the first indication information is carried in the RRC signaling.

In some embodiments, the first indication information is transmitted through the RRC signaling, which includes that: the first indication information is transmitted through a system message.

In some embodiments, in a case where part or all of the first indication information is transmitted through the DCI, if the first PUSCH is a DCI-scheduled PUSCH, then the part or all of the first indication information is transmitted through a DCI for scheduling the first PUSCH; or, if the first PUSCH is a preconfigured configured grant PUSCH (CG-PUSCH), then the part or all of the first indication information is transmitted through a DCI for activating the first PUSCH.

Exemplarily, indication information of the first OCC index included in the first indication information is carried in the DCI. When the terminal device is configured to transmit the PUSCH in the time domain in the manner of OCC spreading, the first DCI format for scheduling the PUSCH transmission includes a first information field for indicating the first OCC index and/or an association relationship between the first OCC index and the first DMRS.

In some embodiments, the terminal device spreads the first PUSCH in the time domain in the manner of OCC spreading, which includes that: the terminal device spreads the first PUSCH in the time domain in the manner of OCC spreading based on a time-domain unit size for time-domain OCC spreading, where the time-domain unit size for the time-domain OCC spreading is N PUSCHs, the number of repetitions of the first PUSCH in the time domain is P, and P is an integer multiple of N.

In some embodiments, the terminal device spreads the first PUSCH in the time domain in the manner of OCC spreading, which includes that: the terminal device spreads the first PUSCH in the time domain in the manner of OCC spreading based on a time-domain unit size for time-domain OCC spreading, where the time-domain unit size for the time-domain OCC spreading is M data symbols, the number of data symbols included in one PUSCH of the first PUSCH is Q, and Q is an integer multiple of M.

In some embodiments, the first indication information is further used to determine that the first PUSCH is transmitted in a frequency domain in a manner of OCC spreading, and the terminal device spreads the first PUSCH in the time domain in the manner of OCC spreading, which includes that: the terminal device spreads the first PUSCH in the frequency domain and the time domain in the manner of OCC spreading.

In the embodiments of the present disclosure, based on the first indication information transmitted by the network device, the terminal device spreads the PUSCH to be transmitted by the terminal device in the time domain in the manner of OCC spreading, thereby improving the uplink capacity of the system while ensuring the uplink coverage requirements. In some embodiments, based on the indication of the network device, the terminal device may further spread the PUSCH to be transmitted by the terminal device in the frequency domain and the time domain in the manner of OCC spreading, thereby further improving the data transmission performance after spreading.

Hereinafter, the method for channel transmission method according to the embodiments of the present disclosure will be described by way of specific examples.

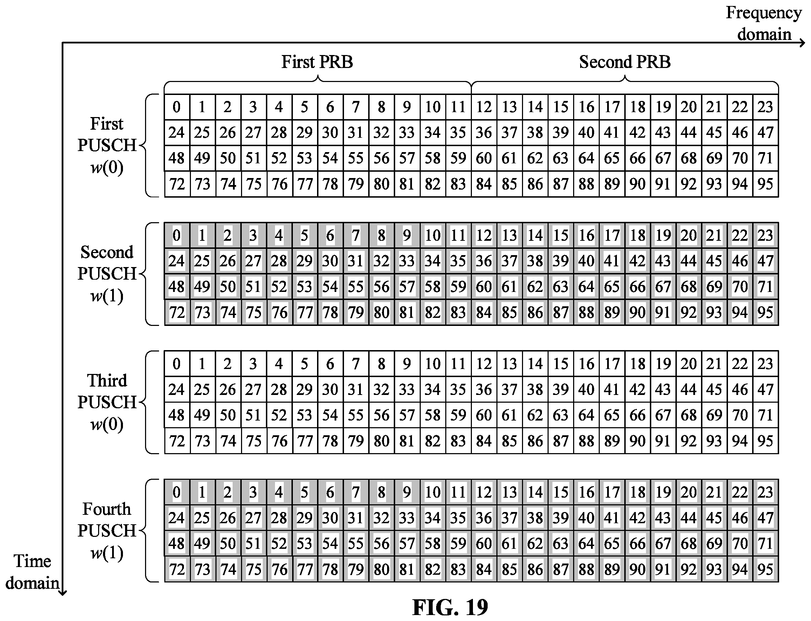

By way of example, FIG. 19 illustrates an example of the transmission of the first PUSCH. The network device configures the terminal device to perform PUSCH transmission in the time domain in the manner of OCC spreading. The time-domain unit size for the time-domain OCC spreading is 2 PUSCHs, and each PUSCH in the first PUSCH occupies 4 data symbols in the time domain excluding DMRS, and occupies 2 PRBs in the frequency domain. The number P of repetitions of the first PUSCH in the time domain is 4, and the interval between data symbols associated with two adjacent OCC factors is the number 4 of data symbols included in one PUSCH. The number of layers for the transmission of the first PUSCH is 1, and the associated first OCC is {$w(0)$, $w(1)$}. Based on the above information, the terminal device determines that the number of REs occupied by the first TB is 96 (i.e., the number 2 of PRBs occupied by the transmission of the first PUSCH * 12 * the number 4 of data symbols in the time slot occupied by each PUSCH transmission * the number 1 of time slots occupied by the transmission of the first PUSCH), based on the number 2 of PRBs occupied by the transmission of the first PUSCH, the number 4 of data symbols in the time slot occupied by each PUSCH repetition in the first PUSCH, and the number 1 of time slots occupied by each PUSCH repetition, thereby determining the size of the first TB, and determining that the example of resource mapping for the first PUSCH is illustrated in FIG. 19. Herein, the numbers indicate a mapping order of modulation symbols of the first PUSCH onto the REs, where the mapping order is first frequency-domain and then time-domain and the identical numbers indicate mapping of the same modulation symbol. The data symbols in the 1st and 3rd PUSCHs of the first PUSCH are scrambled with the OCC factor $w(0)$, and the data symbols in the 2nd and 4th PUSCHs of the first PUSCH are scrambled with the OCC factor $w(1)$.

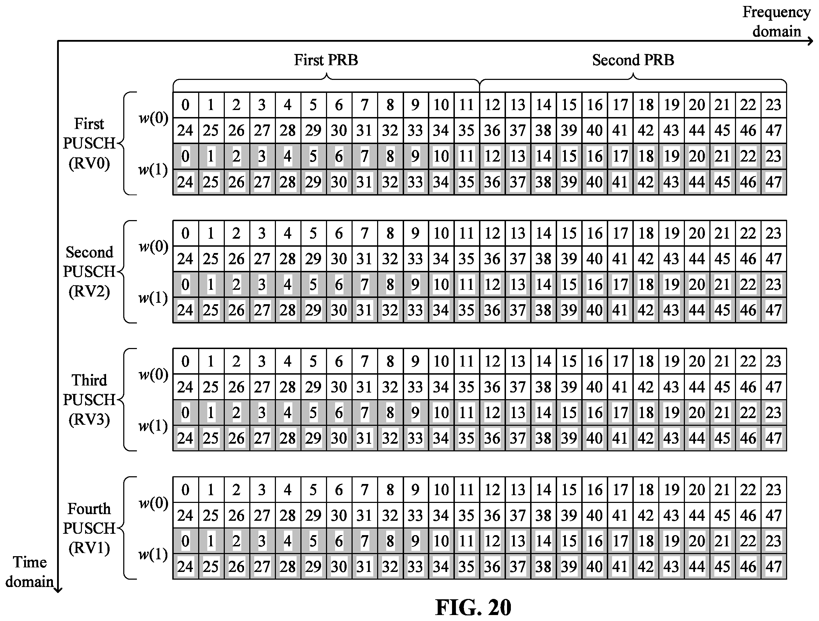

By way of example, FIG. 20 illustrates another example of the transmission of the first PUSCH. The network device configures the terminal device to perform PUSCH transmission in the time domain in the manner of OCC spreading. The frequency-domain unit size for the time-domain OCC spreading is 1 PUSCH, and each PUSCH in the first PUSCH occupies 4 data symbols in the time domain excluding DMRS, and occupies 2 PRBs in the frequency domain. The number P of repetitions of the first PUSCH in the time domain is 4, and the interval between data symbols associated with two adjacent OCC factors is 2. Different PUSCH repetitions in the first PUSCH are associated with different RVs, for example, in this example, the RVs associated with the 4 PUSCH repetitions are {0, 2, 3, 1}, respectively. The number of layers for the transmission of the first PUSCH is 1, and the associated first OCC is {$w(0)$, $w(1)$}. Based on the above information, the terminal device determines that the number of REs occupied by the first TB is 48 (i.e., the number 2 of PRBs occupied by the transmission of the first PUSCH * 12 * the number 4 of data symbols in the time slot occupied by the transmission of the first PUSCH * the number 1 of time slots occupied by the transmission of the first PUSCH/the first OCC length 2), based on the first OCC length 2, the number 2 of PRBs occupied by the transmission of the first PUSCH, the number 4 of data symbols in the time slot occupied by the each PUSCH repetition in the first PUSCH, and the number 1 of time slots occupied by each PUSCH repetition, thereby determining the size of the first TB, and determining that the example of resource mapping for the first PUSCH is illustrated in FIG. 20. Herein, the numbers indicate a mapping order of modulation symbols of the first PUSCH onto the REs, where the mapping order is first frequency-domain and then time-domain and the identical numbers indicate mapping of the same modulation symbol. The first two data symbols of each PUSCH repetition in the first PUSCH are scrambled with the OCC factor $w(0)$, and the last two data symbols are scrambled with the OCC factor $w(1)$.

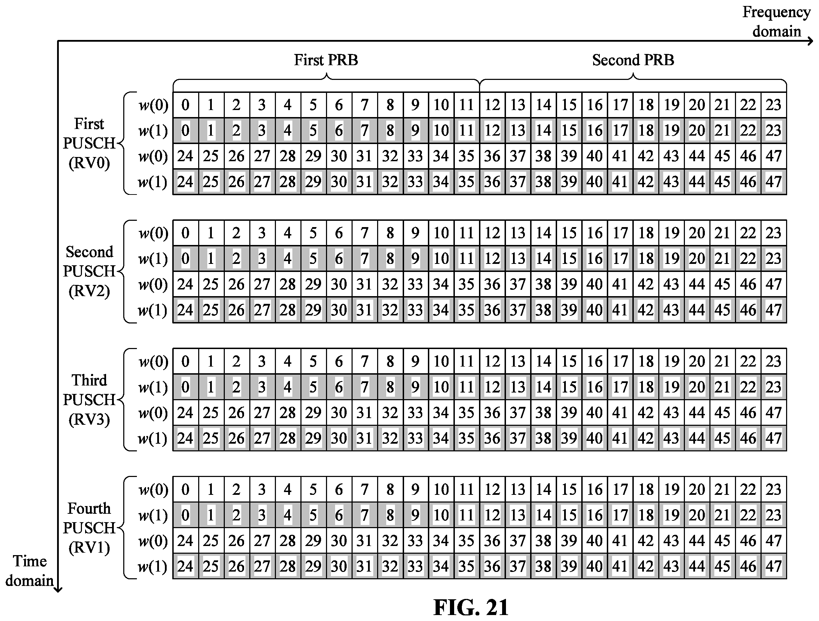

By way of example, FIG. 21 illustrates another example of the transmission of the first PUSCH. The network device configures the terminal device to perform PUSCH transmission in the time domain in the manner of OCC spreading. The frequency-domain unit size for the time-domain OCC spreading is 2 data symbols, and each PUSCH repetition in the first PUSCH occupies 4 data symbols in the time domain excluding DMRS, and occupies 2 PRBs in the frequency domain. The number P of repetitions of the first PUSCH in the time domain is 4, and the interval between data symbols associated with two adjacent OCC factors is 1. Different PUSCH repetitions in the first PUSCH are associated with different RVs, for example, in this example, the RVs associated with the PUSCH repetitions are {0, 2, 3, 1}, respectively. The number of layers for the transmission of the first PUSCH is 1, and the associated first OCC is {$w(0)$, $w(1)$}. Based on the above information, the terminal device determines that the number of REs occupied by the first TB is 48 (i.e., the number 2 of PRBs occupied by the transmission of the first PUSCH * 12 * the number 4 of data symbols in the time slot occupied by the transmission of the first PUSCH * the number 1 of time slots occupied by the transmission of the first PUSCH/the first OCC length 2), based on the first OCC length 2, the number 2 of PRBs occupied by the transmission of the first PUSCH, the number 4 of data symbols in the time slot occupied by each PUSCH repetition in the first PUSCH, and the number 1 of time slots occupied by each PUSCH repetition, thereby determining the size of the first TB, and determining that the example of resource mapping for the first PUSCH is illustrated in FIG. 21. Herein, the numbers indicate a mapping order of modulation symbols of the first PUSCH onto the REs, where the mapping order is first frequency-domain and then time-domain and the identical numbers indicate mapping of the same modulation symbol. The even-numbered data symbols of each PUSCH repetition in the first PUSCH are scrambled with the OCC factor w(0), and the odd-numbered data symbols are scrambled with the OCC factor $w(1)$.

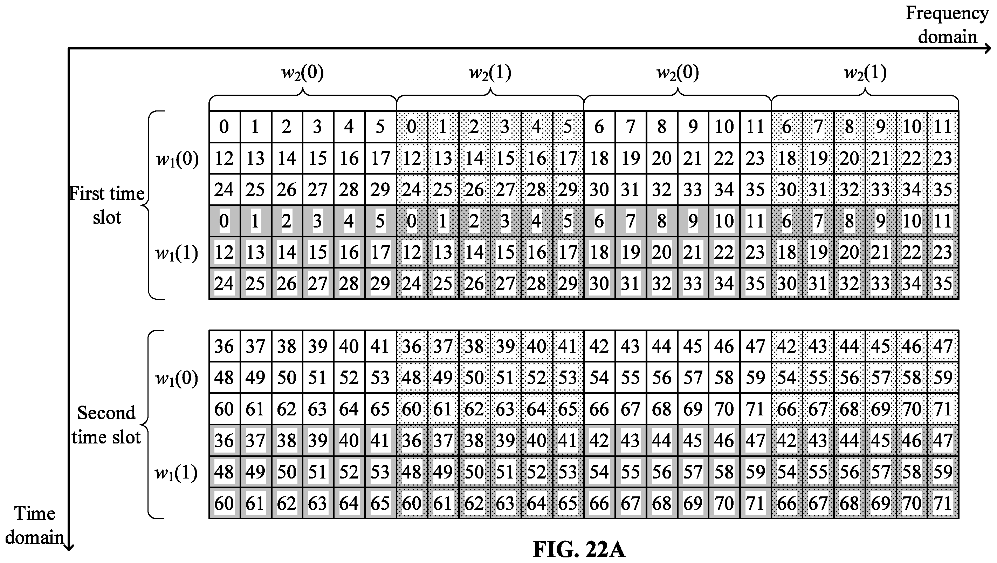

By way of example, FIG. 22A illustrates another example of the transmission of the first PUSCH. The network device configures the terminal device to perform PUSCH transmission in the time domain and the frequency domain in the manner of OCC spreading. The first PUSCH occupies 2 consecutive time slots in the time domain, occupies 6 symbols in each time slot excluding DMRS, and occupies 2 PRBs in the frequency domain. The number of time slots occupied by the first TB transmitted in the first PUSCH is 2, the number of layers for the transmission of the first PUSCH is 1, the OCC associated with the time-domain OCC spreading is $\{w_1(0), w_1(1)\}$, and the OCC associated with the frequency-domain OCC spreading is $\{w_2(0), w_2(1)\}$. The interval between data symbols associated with two adjacent OCC factors in the time domain is 3, and the interval between REs associated with two adjacent OCC factors in the frequency domain is 6. Based on the above information, an example of resource mapping for the first PUSCH transmitted after the OCC spreading in the time domain and the OCC spreading in the frequency domain is illustrated in FIG. 22A. Herein, the numbers indicate a mapping order of modulation symbols of the first PUSCH onto the REs, where the mapping order is first frequency-domain and then time-domain and the identical numbers indicate mapping of the same modulation symbol. In the frequency domain, the first 6 REs of each PRB are scrambled with the OCC factor $w_2(0)$, and the last 6 REs are scrambled with the OCC factor $w_2(1)$. In the time domain, the first 3 data symbols of each PUSCH repetition are scrambled with the OCC factor $w_1(0)$, and the last 3 data symbols are scrambled with the OCC factor $w_1(1)$.

In FIG. 22A, based on the first OCC length 2, a second OCC length 2 (i.e., the length of the OCC corresponding to the frequency domain), the number 2 of PRBs occupied by the transmission of the first PUSCH, the number 6 of data symbols in the time slot occupied by the transmission of each PUSCH in the first PUSCH, and the number 2 of time slots occupied by the transmission of the first TB in the first PUSCH, the number of REs occupied by the first TB is determined to be 72 (i.e., the number 2 of PRBs occupied by the transmission of the first PUSCH * 12 * the number 6 of data symbols in the time slot occupied by the transmission of the first PUSCH * the number 2 of time slots occupied by the transmission of the first PUSCH/(the first OCC length 2 * the second OCC length 2)), thereby determining the size of the first TB.

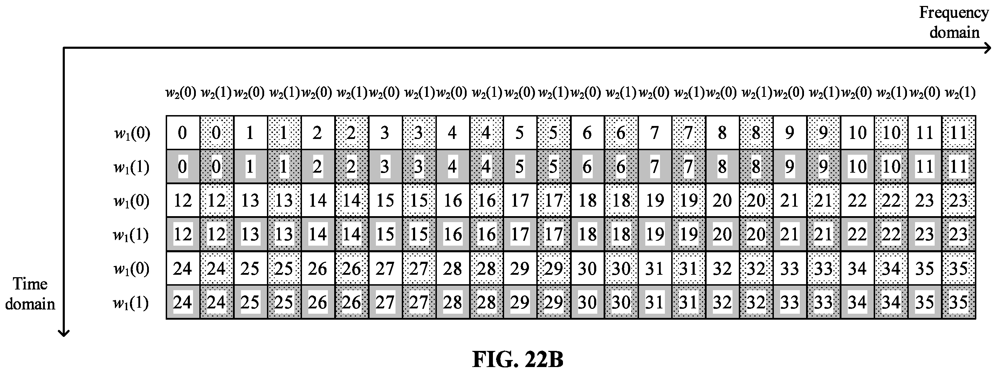

By way of example, FIG. 22B illustrates another example of the transmission of the first PUSCH. The network device configures the terminal device to perform PUSCH transmission in the time domain and the frequency domain in the manner of OCC spreading. The first PUSCH occupies 6 symbols in the time domain excluding DMRS, and occupies 2 PRBs in the frequency domain. The number of time slots occupied by the first TB transmitted in the first PUSCH is 1, the number of layers for the transmission of the first PUSCH is 1, the OCC associated with the time-domain OCC spreading is $\{w_1(0), w_1(1)\}$, and the OCC associated with the frequency-domain OCC spreading is $\{w_2(0), w_2(1)\}$. The interval between data symbols associated with two adjacent OCC factors in the time domain is 1, and the interval between REs associated with two adjacent OCC factors in the frequency domain is 1. Based on the above information, an example of resource mapping for the first PUSCH transmitted after the OCC spreading in the time domain and the OCC spreading in the frequency domain is illustrated in FIG. 22B. Herein, the numbers indicate a mapping order of modulation symbols of the first PUSCH onto the REs, where the mapping order is first frequency-domain and then time-domain and the identical numbers indicate mapping of the same modulation symbol. In the frequency domain, the even-numbered REs (i.e., 0th, 2nd, 4th, 6th, 8th, 10th REs) of each PRB are scrambled with the OCC factor $w_2(0)$ and the odd-numbered REs (i.e., 1st, 3rd, 5th, 7th, 9th, 11th REs) are scrambled with the OCC factor $w_2(1)$. In the time domain, the even-numbered data symbols (i.e., 0th, 2nd, 4th data symbols) of each PUSCH repetition are scrambled with the OCC factor $w_1(0)$, and the odd-numbered data symbols (i.e., 1st, 3rd, 5th data symbols) are scrambled with the OCC factor $w_1(1)$.

In FIG. 22B, based on the first OCC length 2, a second OCC length 2 (i.e., the length of the OCC corresponding to the frequency domain), the number 2 of PRBs occupied by the transmission of the first PUSCH, the number 6 of data symbols in the time slot occupied by the transmission of the first PUSCH, and the number 1 of time slots occupied by the transmission of the first TB in the first PUSCH, the number of REs occupied by the first TB is determined to be 36 (i.e., the number 2 of PRBs occupied by the transmission of the first PUSCH * 12 * the number 6 of data symbols in the time slot occupied by the transmission of the first PUSCH * the number 1 of time slots occupied by the transmission of the first PUSCH/(the first OCC length 2 * the second OCC length 2)), thereby determining the size of the first TB.

It can be understood that in some embodiments, the method for channel transmission provided by the embodiments of the present disclosure can also be used for transmission of other uplink channels other than PUSCH, such as physical random access channel (PRACH) transmission.

For example, the above operations S701 and S702 may be replaced with the following operations.

S701, the terminal device receives first indication information transmitted by the network device, here, the first indication information is used for determining that a first PRACH is transmitted in a time domain in a manner of OCC spreading.

S702: the terminal device spreads the first PRACH in the time domain in the manner of OCC spreading, and transmits the first PRACH to the network device.

Accordingly, in these embodiments, the data symbols occupied by the transmission of the first PUSCH may also be replaced with PRACH symbols occupied by transmission of the first PRACH.

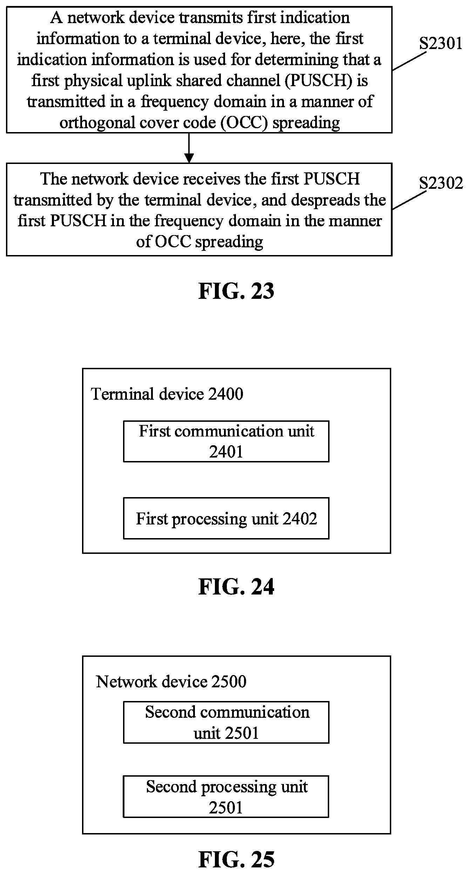

As illustrated in FIG. 23, a method for channel transmission provided by an embodiment of the present disclosure is applied to a network device, and includes operations S2301 and S2302.

S2301, the network device transmits first indication information to a terminal device, here, the first indication information is used for determining that a first PUSCH is transmitted in a time domain in a manner of OCC spreading.

S2302, the network device receives the first PUSCH transmitted by the terminal device, and despreads the first PUSCH in the time domain in the manner of OCC spreading.

The network device transmits the first indication information to the terminal device, to enable the terminal device to determine, based on the first indication information, that when the first PUSCH is to be transmitted in the time domain in the manner of OCC spreading, the terminal device spreads the first PUSCH in the time domain in the manner of OCC spreading, and transmits the spread first PUSCH to the network device. The first PUSCH received by the network device is the first PUSCH obtained after spreading in the time domain in the manner of OCC spreading, in this case, the network device despreads the received first PUSCH in the time domain in the manner of OCC spreading, and the decodes the first PUSCH to obtain the data information transmitted by the terminal device.

In some embodiments, despreading the first PUSCH in the time domain in the manner of OCC spreading, which includes: on the same RE occupied by the first PUSCH, descrambling data symbols that are located at different time-domain positions and carry the same information by using different OCC factor in an OCC.

In some embodiments, the first indication information may be used to determine that the PUSCH is transmitted in the time domain in the manner of OCC spreading. The first PUSCH is any PUSCH transmitted after receiving the first indication information; or the first PUSCH is any PUSCH, corresponding to a first DCI format, transmitted after receiving the first indication information.

In some embodiments, the first indication information may be used to determine that the PUSCH is transmitted in the time domain in the manner of OCC spreading. After the network device transmits the first indication information, for a received PUSCH corresponding to the first DCI format, the network device despreads the PUSCH in the time domain in the manner of OCC spreading; and/or, for a received PUSCH not corresponding to the first DCI format, the network device does not despread the PUSCH in the manner of time-domain OCC spreading.

Exemplarily, the first DCI format includes DCI format 0_1. After the network device transmits the first indication information, the PUSCH scheduled by the DCI format 0_1 and received by the network device is a PUSCH transmitted by the terminal device in the time domain in the manner of OCC spreading, in this case, the network device despreads the received PUSCH scheduled by the DCI format 0_1 in the time domain in the manner of OCC spreading. The PUSCH scheduled by DCI format 0_0 and received by the network device is a PUSCH transmitted by the terminal device without time-domain OCC spreading, in this case, the network device does not despread the received PUSCH scheduled by DCI format 0_1 in the time domain in the manner of OCC spreading.

In the method for channel transmission according to the embodiment of the present disclosure, the network device transmits the first indication information to the terminal device, to enable the network device to receive the first PUSCH transmitted in the time domain in the manner of OCC spreading, and despread the first PUSCH in the time domain in the manner of OCC spreading, thereby improving the uplink capacity of the system while ensuring the uplink coverage requirements.

In some embodiments, the network device despreads the first PUSCH in the time domain in the manner of OCC spreading, which includes the following operation.

The network device despreads the first PUSCH in the time domain in the manner of OCC spreading, based on one or more of: a time-domain unit size for time-domain OCC spreading; an interval between data symbols associated with two adjacent OCC factors; a first OCC, where the first OCC is an OCC used for the time-domain OCC spreading; a first OCC length, where the first OCC length is a length of the first OCC; a first OCC set, where the first OCC set is an OCC set associated with the first OCC length; a first OCC index, where the first OCC index is used for indicating the first OCC; or a first DMRS port, where the first DMRS port is a DMRS port associated with the first OCC index.

In some embodiments, the time-domain unit size for the time-domain OCC spreading includes one of: N PUSCHs, where N is the first OCC length or N is 1; or, M data symbols, where M is an integer multiple of N.

In some embodiments, the time-domain unit size for the time-domain OCC spreading is N PUSCHs, the number of repetitions of the first PUSCH in the time domain is P, and P is an integer multiple of N.

In some embodiments, the time-domain unit size for the time-domain OCC spreading is M data symbols, the number of data symbols included in one PUSCH of the first PUSCH is Q, and Q is an integer multiple of M.

It is noted that the number M of data symbols is the number of data symbols excluding DMRS symbols.

In some embodiments, data symbols occupied by transmission of the first PUSCH include one or more time-domain units for the time-domain OCC spreading.

In some embodiments, the time-domain unit size for the time-domain OCC spreading is N PUSCHs, and the number of repetitions of the first PUSCH in the time domain includes an integer number of time-domain units for the time-domain OCC spreading.

In some embodiments, the time-domain unit size for the time-domain OCC spreading is M data symbols, and one PUSCH of the first PUSCH includes an integer number of time-domain units for the time-domain OCC spreading.

In some embodiments, the OCC factor of an OCC having an OCC index of $i$ and a length of N may be represented by $w_i(m)$, where $m$ ranges from 0 to N-1. It can be understood that when the values of $m$ are adjacent integers, they can represent two adjacent OCC factors. Exemplarily, $w_i(0)$ and $w_i(1)$ are two adjacent OCC factors, $w_i(1)$ and $w_i(2)$ are two adjacent OCC factors.

In some embodiments, the interval between the data symbols associated with the two adjacent OCC factors includes one of: the interval between the data symbols associated with the two adjacent OCC factors is 1; the interval between the data symbols associated with the two adjacent OCC factors is 2; the interval between the data symbols associated with the two adjacent OCC factors is 4; the interval between the data symbols associated with the two adjacent OCC factors is the number of data symbols included in one PUSCH; or the interval between the data symbols associated with the two adjacent OCC factors is a ratio of the number of data symbols included in the one PUSCH to the first OCC length.

In some embodiments, one OCC length is associated with one OCC set. Exemplarily, the first OCC length is associated with the first OCC set.

In some embodiments, the first OCC is an OCC, used for the time-domain OCC spreading, corresponding to the first PUSCH; and the length of the first OCC is the first OCC length. Here, the first OCC is an OCC determined from the first OCC set based on the first OCC index.

In some embodiments, the first OCC length is 2, and the first OCC set is: {{+1, +1}, {+1, -1}}.

In some embodiments, the first OCC length is 4, and the first OCC set is one of: {{+1, +1, +1, +1}, {+1, -1, +1, -1}, {+1, +1, -1, -1}, {+1, -1, -1, +1}}; or {{+1, +1, +1, +1}, {+1, -j, -1, +j}, {+1, -1, +1, -1}, {+1, +j, -1, -j}}.

In some embodiments, the first OCC length is N, and the first OCC set is determined according to the following formula:

$$w_i(m) = e^{j2\pi\phi(m)/N} \; .$$

Herein, $i$ denotes an OCC index in the first OCC set, $i$ ranges from 0 to N-1, $w_i(m)$ denotes an $m$-th OCC factor included in an $i$-th OCC, $m$ ranges from 0 to N-1, and $\phi(m)$ is a preset value determined based on $i$ and N.

In some embodiments, the first DMRS port is a DMRS port to which the first OCC is applied.

In some embodiments, the network device despreads the first PUSCH in the time domain in the manner of OCC spreading, which includes the following operation.

The network device despreads the first PUSCH in the time domain in the manner of OCC spreading, based on the first OCC. Here, the first OCC is an OCC determined from the first OCC set based on the first OCC index.

Exemplarily, the network device determines the first OCC from the first OCC set corresponding to the first OCC length based on an indication of the first OCC index, and despreads the first PUSCH by means of OCC spreading in the time domain, using the first OCC.

In the following, by taking the case where the first OCC length N = 4 and the first OCC is {$w(0)$, $w(1)$, $w(2)$, $w(3)$} as an example, the illustration of despreading the first PUSCH in the time domain in the manner of OCC spreading is provided. That is to say, on the same RE of the REs occupied by the first PUSCH, data symbols at different time-domain positions and carrying the same information are descrambled with the OCC factors {$w(0)$, $w(1)$, $w(2)$, $w(3)$} in the first OCC, respectively.

Exemplarily, data symbols occupied by one PUSCH transmission include multiple time-domain units for the time-domain OCC spreading, where the interval between the data symbols associated with the two adjacent OCC factors is a ratio of the number of data symbols included in a time-domain unit for the time-domain OCC spreading to the first OCC length N. FIG. 14 illustrates an example in which data symbols occupied by one PUSCH transmission include two time-domain units for the time-domain OCC spreading.

Exemplarily, data symbols occupied by one PUSCH transmission include one time-domain unit for the time-domain OCC spreading, where the interval between the data symbols associated with the two adjacent OCC factors is a ratio of the number of data symbols included in one PUSCH to the first OCC length N. FIG. 15 illustrates an example in which data symbols occupied by one PUSCH transmission include one time-domain unit for the time-domain OCC spreading.

It should be noted that in a case where the data symbols occupied by one PUSCH transmission include one or more time-domain units for the time-domain OCC spreading (for example, the cases illustrated in FIGS. 14 and 15), if the first PUSCH corresponds to P repetitions, then redundancy versions (RVs) associated with the P repetitions may be the same or different. FIG. 16 illustrates an example in which the first PUSCH corresponds to 2 repetitions, and the RVs associated with the 2 repetitions are 0 and 2, respectively, where the data symbols occupied by one PUSCH transmission include one time-domain unit for the time-domain OCC spreading.

Exemplarily, data symbols occupied by one PUSCH transmission are associated with one spreading factor, that is, one time-domain unit for the time-domain OCC spreading includes data symbols occupied by N PUSCH transmissions, where the interval between the data symbols associated with the two adjacent OCC factors is the number of data symbols occupied by one PUSCH transmission. FIG. 17 illustrates an example in which one time-domain unit for the time-domain OCC spreading includes data symbols occupied by 4 PUSCH transmissions, and data symbols occupied by one PUSCH transmission are associated with one spreading factor.

Exemplarily, in a case where data symbols occupied by one PUSCH transmission are associated with one spreading factor, that is, one time-domain unit for the time-domain OCC spreading includes data symbols occupied by N PUSCH transmissions, if the first PUSCH corresponds to P repetitions, and P is an integer multiple of N, then the RVs associated with every N repetitions in the P repetitions may be the same or different, where N is the first OCC length. FIG. 18 illustrates an example in which N = 4, P = 8, that is, the first PUSCH corresponds to 2 time-domain units for the time-domain OCC spreading, and the RVs associated with the 2 time-domain units for the time-domain OCC spreading are 0 and 2, respectively, where data symbols occupied by one PUSCH transmission are associated with one spreading factor.

In some embodiments, the time-domain unit size for the time-domain OCC spreading is predefined.

In some embodiments, the interval between the data symbols associated with the two adjacent OCC factors is predefined.

In some embodiments, the first OCC length is predefined.

In some embodiments, the first OCC set is predefined.

In some embodiments, the first OCC index is predefined.

In some embodiments, the first DMRS port is predefined.

In some embodiments, the first indication information is used to determine one or more of: whether time-domain OCC spreading is enabled; a time-domain unit size for the time-domain OCC spreading; an interval between data symbols associated with two adjacent OCC factors; a first OCC, where the first OCC is an OCC used for the time-domain OCC spreading; a first OCC length, where the first OCC length is a length of the first OCC; a first OCC set, where the first OCC set is an OCC set associated with the first OCC length; a first OCC index, where the first OCC index is used to indicate the first OCC; or a first DMRS port, where the first DMRS port is a DMRS port associated with the first OCC index.

In some embodiments, if the first indication information is configured to enable the time-domain OCC spreading, the first indication information is used to determine that the first PUSCH is transmitted in the time domain in the manner of OCC spreading; or, if the first indication information is not configured to enable the time-domain OCC spreading or the first indication information is configured to disable the time-domain OCC spreading, the first indication information is used to determine that the first PUSCH is transmitted in the time domain without the OCC spreading.

When the network device configures the first indication information and/or the first indication information indicates that the time-domain OCC spreading is enabled, it indicates that the first indication information is used to determine that the first PUSCH is transmitted in the time domain in the manner of OCC spreading, in this case, the network device despreads the first PUSCH in the manner of the time-domain OCC spreading. Alternatively, when the network device does not configure the first indication information or the network device configures the first indication information and the first indication information indicates that the time-domain OCC spreading is disabled or not enabled, it indicates that the first indication information is used to determine that the first PUSCH is transmitted in the time domain without the time-domain OCC spreading, in this case, the network device does not spread the first PUSCH in the manner of the time-domain OCC spreading.

In some embodiments, the first indication information is used to determine that the first PUSCH is transmitted in the time domain in the manner of OCC spreading, if the first indication information indicates one or more of: the time-domain unit size for the time-domain OCC spreading; the interval between the data symbols associated with the two adjacent OCC factors; the first OCC; the first OCC length; the first OCC set; the first OCC index; or the first DMRS port.

It can be understood that when the first indication information transmitted by the network device is used to indicate one or more of the above-described information, the first indication information is used to implicitly indicate that the first PUSCH is transmitted in the time domain in the manner of OCC spreading, and accordingly, the network device despreads the first PUSCH in the manner of the time-domain OCC spreading.

In some embodiments, if the first indication information does not indicate the time-domain unit size for the time-domain OCC spreading, the time-domain unit size for the time-domain OCC spreading is predefined.

Exemplarily, when the first indication information indicates the time-domain unit size for the time-domain OCC spreading, the network device determines the time-domain unit size for the time-domain OCC spreading based on the first indication information, otherwise, the network device determines that the time-domain unit size for the time-domain OCC spreading is a predefined value or the network device determines the time-domain unit size for the time-domain OCC spreading based on a predefined rule.

Exemplarily, the time-domain unit size for the time-domain OCC spreading is 1 PUSCH or N data symbols, where N is the first OCC length.

Exemplarily, the time-domain unit size for the time-domain OCC spreading is determined based on a PUSCH mapping type.

Exemplarily, when the PUSCH mapping type corresponding to the first PUSCH is Type A, the time-domain unit size for the time-domain OCC spreading is N data symbols.

Exemplarily, when the PUSCH mapping type corresponding to the first PUSCH is Type B, the time-domain unit size for the time-domain OCC spreading is 1 PUSCH.

In some embodiments, if the first indication information does not indicate the interval between the data symbols associated with the two adjacent OCC factors, the interval between the data symbols associated with the two adjacent OCC factors is predefined.

Exemplarily, when the first indication information indicates the interval between the data symbols associated with the two adjacent OCC factors, the network device determines the interval between the data symbols associated with the two adjacent OCC factors based on the first indication information, otherwise, the network device determines that the interval between the data symbols associated with the two adjacent OCC factors is a predefined value or the network device determines the interval between the data symbols associated with the two adjacent OCC factors based on a predefined rule. For example, the interval between the data symbols associated with the two adjacent OCC factors is predefined to be 1 in a protocol.

In some embodiments, if the first indication information does not indicate the first OCC length, the first OCC length is predefined.

Exemplarily, when the first indication information indicates the first OCC length, the network device determines the first OCC length based on the first indication information, otherwise, the network device determines that the first OCC length is a predefined value or the network device determines the first OCC length based on a predefined rule. For example, the first OCC length is predefined to be 4 in a protocol.

In some embodiments, if the first indication information does not indicate the first OCC set, the first OCC set is predefined.

Exemplarily, when the first indication information indicates the first OCC set, the network device determines the first OCC set based on the first indication information, otherwise, the network device determines that the first OCC set is a predefined set or the network device determines the first OCC set based on a predefined rule. For example, the first OCC set is predefined in a protocol.

Exemplarily, the first OCC set includes at least one of the OCC sets illustrated in Tables 3, 4, 5, and 6.

In some embodiments, if the first indication information does not indicate the first OCC index, the first OCC index is predefined.

Exemplarily, when the first indication information indicates the first OCC index, the network device determines the first OCC index based on the first indication information, otherwise, the network device determines the first OCC index based on a predefined rule.

In some embodiments, if the first indication information does not indicate the first DMRS port, the first DMRS port is predefined.

Exemplarily, when the first indication information indicates the first DMRS port, the network device determines an association relationship between the first DMRS port and the first OCC index based on the first indication information, otherwise, the network device determines the association relationship between the first DMRS port and the first OCC index based on a predefined rule. For example, if the first OCC length is 2, and the number of layers for the first PUSCH received by the network device is 2, that is, the first PUSCH is associated with two DMRS ports, then the first OCC in the first OCC set with the OCC length of 2 is applied to the first layer, and the second OCC in the first OCC set with the OCC length of 2 is applied to the second layer.

In some embodiments, the method further includes that: the network device determines a size of a first TB transmitted in the first PUSCH, based on one or more of: a first OCC length, where the first OCC length is a length of a first OCC, and the first OCC is an OCC used for time-domain OCC spreading; the number of PRBs occupied by transmission of the first PUSCH; the number of data symbols in a time slot occupied by the transmission of the first PUSCH; or the number of time slots occupied by the transmission of the first PUSCH.

The size of the first TB is determined based on a size of the first TB in the frequency domain and a size of the first TB in the time domain.

In some embodiments, the size of the first TB is determined based on the number of REs occupied by the first TB, where the number of REs occupied by the first TB is determined based on at least one of: the number of PRBs occupied by the transmission of the first PUSCH, the number of data symbols in the time slot occupied by the transmission of the first PUSCH, the number of time slots occupied by the transmission of the first PUSCH, or the first OCC length.

In some embodiments, in a case where the data symbols occupied by one PUSCH transmission include one or more time-domain units for the time-domain OCC spreading, the number of REs occupied by the first TB is determined based on the number of PRBs occupied by the transmission of the first PUSCH, the number of data symbols in the time slot occupied by the transmission of the first PUSCH, the number of time slots occupied by the transmission of the first PUSCH, and the first OCC length. For example, the number of REs occupied by the first TB is the number of PRBs occupied by the transmission of the first PUSCH * the number of data symbols in the time slot occupied by the transmission of the first PUSCH * the number of time slots occupied by the transmission of the first PUSCH /the first OCC length.

Exemplarily, if the number of PRBs occupied by the transmission of the first PUSCH is 5, the number of data symbols in the time slot occupied by the transmission of the first PUSCH is 10, the number of time slots occupied by the transmission of the first PUSCH is 1, and the first OCC length is 4, then the number of REs occupied by the first TB transmitted in the first PUSCH is 5*12*10*1/4 = 150. Accordingly, the network device may determine the size of the first TB based on 150 REs.

Exemplarily, if the number of PRBs occupied by the transmission of the first PUSCH is 5, the number of data symbols in the time slot occupied by the transmission of the first PUSCH is 10, the number of time slots occupied by the transmission of the first PUSCH is 2, and the first OCC length is 4, then the number of REs occupied by the first TB transmitted in the first PUSCH is 5*12*10*2/4 = 300. Accordingly, the network device may determine the size of the first TB based on 300 REs.

In some embodiments, in a case where one time-domain unit for the time-domain OCC spreading includes data symbols occupied by N PUSCH transmissions, the number of REs occupied by the first TB is determined based on the number of PRBs occupied by the transmission of the first PUSCH, the number of data symbols in the time slot occupied by the transmission of the first PUSCH, and the number of time slots occupied by the transmission of the first PUSCH, where N is the first OCC length. For example, the number of REs occupied by the first TB is the number of PRBs occupied by the transmission of the first PUSCH * the number of data symbols in the time slot occupied by the transmission of the first PUSCH * the number of time slots occupied by the transmission of the first PUSCH.

Exemplarily, if the number of PRBs occupied by the transmission of the first PUSCH is 2, the number of data symbols in the time slot occupied by the transmission of the first PUSCH is 10, and the number of time slots occupied by the transmission of the first PUSCH is 1, then the number of REs occupied by the first TB transmitted in the first PUSCH is 2*12*10*1 = 240. Accordingly, the network device may determine the size of the first TB based on 240 REs.

In some embodiments, the number of time slots occupied by the transmission of the first PUSCH is 1.

In some embodiments, the first indication information is used to indicate one or more of: the number of PRBs occupied by the transmission of the first PUSCH; the number of data symbols in the time slot occupied by the transmission of the first PUSCH; or the number of time slots occupied by the transmission of the first PUSCH.

Exemplarily, the first indication information is used to determine the number of time slots occupied by the first TB transmitted in the first PUSCH. For example, if the first indication information indicates that 4 time slots are occupied by the first TB, then the network device determines the size of the first TB based on the number of REs used for the transmission of the first PUSCH within the 4 time slots. For another example, if the first indication information indicates that 2 time slots are occupied by the first TB, then the network device determines the size of the first TB based on the number of REs used for the transmission of the first PUSCH within the 2 time slots.

In some embodiments, if the first indication information does not indicate the number of time slots occupied by the transmission of the first PUSCH, the number of time slots occupied by the transmission of the first PUSCH is 1.

Exemplarily, when the first indication information indicates the number of time slots occupied by the transmission of the first PUSCH, the network device determines the number of time slots occupied by the transmission of the first PUSCH based on the first indication information, otherwise, the network device determines that the number of time slots occupied by the transmission of the first PUSCH is 1.

In some embodiments, the first indication information is transmitted through an RRC signaling; or, the first indication information is transmitted through a DCI; or, a part of the first indication information is transmitted through an RRC signaling, and a part of the first indication information is transmitted through a DCI.

Exemplarily, all information in the first indication information is transmitted through an RRC signaling.

Exemplarily, all information in the first indication information is transmitted through a DCI.

Exemplarily, a part of the first indication information is transmitted through an RRC signaling, and another part of the first indication information is transmitted through a DCI. For example, if the first indication information includes indication information of whether the time-domain OCC spreading is enabled, the indication information of whether the time-domain OCC spreading is enabled is carried in the RRC signaling. For another example, if the first indication information includes indication information of the time-domain unit size for the time-domain OCC spreading, the indication information of the time-domain unit size for the time-domain OCC spreading is carried in the RRC signaling. For another example, if the first indication information includes indication information of the interval between the data symbols associated with the two adjacent OCC factors, the indication information of the interval between the data symbols associated with the two adjacent OCC factors is carried in the RRC signaling. For another example, if the first indication information includes indication information of the first OCC set, the indication information of the first OCC set is carried in the RRC signaling. For another example, if the first indication information includes indication information of the first OCC length, the indication information of the first OCC length is carried in the RRC signaling or the DCI. For another example, if the first indication information includes indication information of the first OCC index, the indication information of the first OCC index is carried in the DCI. For another example, if the first indication information includes indication information of the first DMRS port, the indication information of the first DMRS port is carried in the DCI.

Exemplarily, the information, for determining the first OCC index and/or the first DMRS port, in the first indication information is carried in the DCI; and the information, for determining information other than the first OCC index and the first DMRS port, in the first indication information is carried in the RRC signaling.

In some embodiments, the first indication information is transmitted through the RRC signaling, which includes that: the first indication information is transmitted through a system message.

In some embodiments, in a case where part or all of the first indication information is transmitted through the DCI, if the first PUSCH is a DCI-scheduled PUSCH, then the part or all of the first indication information is transmitted through a DCI for scheduling the first PUSCH; or, if the first PUSCH is a preconfigured CG-PUSCH, then the part or all of the first indication information is transmitted through a DCI for activating the first PUSCH.

Exemplarily, indication information of the first OCC index included in the first indication information is carried in the DCI. When the network device configures the terminal device to transmit the PUSCH in the time domain in the manner of OCC spreading, the first DCI format for scheduling the PUSCH transmission includes a first information field for indicating the first OCC index and/or an association relationship between the first OCC index and the first DMRS.

In some embodiments, the network device despreads the first PUSCH in the time domain in the manner of OCC spreading, which includes that: the network device despreads the first PUSCH in the time domain in the manner of OCC spreading based on a time-domain unit size for time-domain OCC spreading, where the time-domain unit size for the time-domain OCC spreading is N PUSCHs, the number of repetitions of the first PUSCH in the time domain is P, and P is an integer multiple of N.

In some embodiments, the network device despreads the first PUSCH in the time domain in the manner of OCC spreading, which includes that: the network device despreads the first PUSCH in the time domain in the manner of OCC spreading based on a time-domain unit size for time-domain OCC spreading, where the time-domain unit size for the time-domain OCC spreading is M data symbols, the number of data symbols included in one PUSCH of the first PUSCH is Q, and Q is an integer multiple of M.

In some embodiments, the first indication information is further used to determine that the first PUSCH is transmitted in a frequency domain in a manner of OCC spreading, and the network device despreads the first PUSCH in the time domain in the manner of OCC spreading, which includes that: the network device despreads the first PUSCH in the frequency domain and the time domain in the manner of OCC spreading.

In the embodiments of the present disclosure, the PUSCH received by the network device is a PUSCH after spreading in the time domain in the manner of OCC spreading, and the network device despreads the received PUSCH in the time domain in the manner of OCC spreading, thereby improving the uplink capacity of the system while ensuring the uplink coverage requirements. In some embodiments, the PUSCH received by the network device is a PUSCH after spreading in the frequency domain and the time domain in the manner of OCC spreading, and the network device despreads the received PUSCH in the time domain and the frequency domain in the manner of OCC spreading, thereby further improving data transmission performance after spreading.

It can be understood that in some embodiments, the method for channel transmission provided by the embodiments of the present disclosure can also be used for transmission of other uplink channels other than PUSCH, such as PRACH transmission.

For example, the operations S2301 and S2302 may be replaced with the following operations.

S2301, the network device transmits first indication information to the terminal device, here, the first indication information is used for determining that a first PRACH is transmitted in a time domain in a manner of OCC spreading.

S2302: the network device receives the first PRACH transmitted by the terminal device, and despreads the first PRACH in the time domain in the manner of OCC spreading.

Accordingly, in these embodiments, the data symbols occupied by the transmission of the first PUSCH may also be replaced with PRACH symbols occupied by transmission of the first PRACH.

The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solutions of the present disclosure, and these simple modifications all fall within the scope of protection of the present disclosure. For example, various specific technical features described in the above-described embodiments can be combined in any suitable manner without contradiction, and various possible combinations will not be described separately in the present disclosure in order to avoid unnecessary repetition. For example, various embodiments of the present disclosure may be combined arbitrarily, and as long as they do not violate the idea of the present disclosure, they should also be regarded as the contents of the present disclosure. For another example, on the premise that there is no conflict, each embodiment described in the present disclosure and/or the technical features in each embodiment can be arbitrarily combined with the related art, and the technical solution obtained after the combination should also fall within the scope of protection of the present disclosure.

It should also be understood that in various method embodiments of the present disclosure, the size of the sequence number of the above-described processes does not mean the sequence of execution, and the sequence of execution of each process should be determined by its function and internal logic, and should not constitute any limitation on the implementation of the embodiments of the present disclosure. In addition, in the embodiments of the present disclosure, the terms "downlink", "uplink", and "sidelink" are used to indicate the transmission directions of signals or data, where "downlink" is used to indicate that the transmission direction of signals or data is a first direction transmitted from the base station to the user equipment in the cell, "uplink" is used to indicate that the transmission direction of signals or data is a second direction transmitted from the user equipment in the cell to the base station, and "sidelink" is used to indicate that the transmission direction of signals or data is a third direction transmitted from the user equipment 1 to the user equipment 2. For example, "downlink signal" indicates that the transmission direction of the signal is the first direction. In addition, in the embodiments of the present disclosure, the term "and/or" describes an association relationship between associated objects, and indicates that there may be three kinds of relationships. Specifically, A and/or B may represent three cases including: A exists alone, A and B exist simultaneously, and B exists alone. In addition, the character "/" herein generally indicates that the related objects before and after the character are in an "or" relationship.

FIG. 24 is a structural diagram of a terminal device according to an embodiment of the present disclosure. As illustrated in FIG. 24, the terminal device 2400 includes a first communication unit 2401 and a first processing unit 2402.

The first communication unit 2401 is configured to receive first indication information transmitted by a network device, where the first indication information is used for determining that a first PUSCH is transmitted in a time domain in a manner of OCC spreading.

The first processing unit 2402 configured to spread the first PUSCH in the time domain in the manner of OCC spreading.

The first communication unit 2401 is further configured to transmit the first PUSCH to the network device.

In some embodiments, the first processing unit 2402 is further configured to spread the first PUSCH in the time domain in the manner of OCC spreading, based on one or more of: a time-domain unit size for time-domain OCC spreading; an interval between data symbols associated with two adjacent OCC factors; a first OCC, where the first OCC is an OCC used for the time-domain OCC spreading; a first OCC length, where the first OCC length is a length of the first OCC; a first OCC set, where the first OCC set is an OCC set associated with the first OCC length; a first OCC index, where the first OCC index is used for indicating the first OCC; or a first DMRS port, where the first DMRS port is a DMRS port associated with the first OCC index.

In some embodiments, the time-domain unit size for the time-domain OCC spreading includes one of: N PUSCHs, where N is the first OCC length or N is 1; or M data symbols, where M is an integer multiple of N.

In some embodiments, the interval between the data symbols associated with the two adjacent OCC factors includes one of: the interval between the data symbols associated with the two adjacent OCC factors is 1; the interval between the data symbols associated with the two adjacent OCC factors is 2; the interval between the data symbols associated with the two adjacent OCC factors is 4; the interval between the data symbols associated with the two adjacent OCC factors is the number of data symbols included in one PUSCH; the interval between the data symbols associated with the two adjacent OCC factors is a ratio of the number of data symbols included in the one PUSCH to the first OCC length; or the interval between the data symbols associated with the two adjacent OCC factors is a ratio of the number of data symbols included in the time-domain unit size for the time-domain OCC spreading to the first OCC length.

In some embodiments, the first OCC length is 2, and the first OCC set is: {{+1, +1}, {+1, -1}}.

In some embodiments, the first OCC length is 4, and the first OCC set is one of: {{+1, +1, +1, +1}, {+1, -1, +1, -1}, {+1, +1, -1, -1}, {+1, -1, -1, +1}}; or {{+1, +1, +1, +1}, {+1, -j, -1, +j}, {+1, -1, +1, -1}, {+1, +j, -1, -j}}.

In some embodiments, the first OCC length is N, and the first OCC set is determined according to the following formula:

$$w_i(m) = e^{j2\pi\phi(m)/N} .$$

Herein, , $i$ denotes an OCC index in the first OCC set, $i$ ranges from 0 to N-1, $w_i(m)$ denotes an $m$-th OCC factor included in an $i$-th OCC, $m$ ranges from 0 to N-1, and $\phi(m)$ is a preset value determined based on $i$ and N.

In some embodiments, the first processing unit 2402 is further configured to spread the first PUSCH in the time domain in the manner of OCC spreading based on the first OCC, where the first OCC is an OCC determined from the first OCC set based on the first OCC index.

In some embodiments, the first indication information is used to determine one or more of: whether time-domain OCC spreading is enabled; a time-domain unit size for the time-domain OCC spreading; an interval between data symbols associated with two adjacent OCC factors; a first OCC, where the first OCC is an OCC used for the time-domain OCC spreading; a first OCC length, where the first OCC length is a length of the first OCC; a first OCC set, where the first OCC set is an OCC set associated with the first OCC length; a first OCC index, where the first OCC index is used for indicating the first OCC; or a first DMRS port, where the first DMRS port is a DMRS port associated with the first OCC index.

In some embodiments, if the first indication information is configured to enable the time-domain OCC spreading, the first indication information is used for determining that the first PUSCH is transmitted in the time domain in the manner of OCC spreading; or if the first indication information is not configured to enable the time-domain OCC spreading or the first indication information is configured to disable the time-domain OCC spreading, the first indication information is used for determining that the first PUSCH is transmitted in the time domain without the OCC spreading.

In some embodiments, the first indication information is used for determining that the first PUSCH is transmitted in the time domain in the manner of OCC spreading, if the first indication information indicates one or more of: the time-domain unit size for the time-domain OCC spreading; the interval between the data symbols associated with the two adjacent OCC factors; the first OCC; the first OCC length; the first OCC set; the first OCC index; or the first DMRS port.

In some embodiments, if the first indication information does not indicate the time-domain unit size for the time-domain OCC spreading, the time-domain unit size for the time-domain OCC spreading is predefined; and/or, if the first indication information does not indicate the interval between the data symbols associated with the two adjacent OCC factors, the interval between the data symbols associated with the two adjacent OCC factors is predefined; and/or, if the first indication information does not indicate the first OCC length, the first OCC length is predefined; and/or, if the first indication information does not indicate the first OCC set, the first OCC set is predefined; and/or, if the first indication information does not indicate the first OCC index, the first OCC index is predefined; and/or, if the first indication information does not indicate the first DMRS port, the first DMRS port is predefined.

In some embodiments, the terminal device 2400 further includes: a first determination unit configured to determine a size of a first TB transmitted in the first PUSCH, based on one or more of: a first OCC length, where the first OCC length is a length of a first OCC, and the first OCC is an OCC used for time-domain OCC spreading; the number of PRBs occupied by transmission of the first PUSCH; the number of data symbols in a time slot occupied by the transmission of the first PUSCH; or the number of time slots occupied by the transmission of the first PUSCH.

In some embodiments, the size of the first TB is determined based on the number of REs occupied by the first TB, where the number of REs occupied by the first TB is determined based on the number of PRBs occupied by the transmission of the first PUSCH, the number of data symbols in the time slot occupied by the transmission of the first PUSCH, the number of time slots occupied by the transmission of the first PUSCH, and the first OCC length.

In some embodiments, the first indication information is used to indicate one or more of: the number of PRBs occupied by the transmission of the first PUSCH; the number of data symbols in the time slot occupied by the transmission of the first PUSCH; or the number of time slots occupied by the transmission of the first PUSCH.

In some embodiments, if the first indication information does not indicate the number of time slots occupied by the transmission of the first PUSCH, the number of time slots occupied by the transmission of the first PUSCH is 1.

In some embodiments, the first indication information is transmitted through an RRC signaling; or, the first indication information is transmitted through a DCI; or, a part of the first indication information is transmitted through an RRC signaling, and a part of the first indication information is transmitted through a DCI.

In some embodiments, in a case where part or all of the first indication information is transmitted through the DCI, if the first PUSCH is a DCI-scheduled PUSCH, the part or all of the first indication information is transmitted through a DCI for scheduling the first PUSCH; or, if the first PUSCH is a preconfigured CG-PUSCH, the part or all of the first indication information is transmitted through a DCI for activating the first PUSCH.

In some embodiments, the first processing unit 2402 is further configured to spread the first PUSCH in the time domain in the manner of OCC spreading based on a time-domain unit size for time-domain OCC spreading, where the time-domain unit size for the time-domain OCC spreading is N PUSCHs, the number of repetitions of the first PUSCH in the time domain is P, and P is an integer multiple of N.

In some embodiments, the first processing unit 2402 is further configured to spread the first PUSCH in the time domain in the manner of OCC spreading based on a time-domain unit size for time-domain OCC spreading, where the time-domain unit size for the time-domain OCC spreading is M data symbols, the number of data symbols included in one PUSCH of the first PUSCH is Q, and Q is an integer multiple of M.

In some embodiments, the first indication information is further used to determine that the first PUSCH is transmitted in a frequency domain in a manner of OCC spreading, and the first processing unit 2402 is further configured to spread the first PUSCH in the frequency domain and the time domain in the manner of OCC spreading.

In the embodiments of the present disclosure, the first communication unit in the terminal device may be implemented by a receiver in the terminal device, and the first processing unit and the first determination unit in the terminal device may be implemented by a processor in the terminal device.

FIG. 25 is a structural diagram of a network device according to an embodiment of the present disclosure. As illustrated in FIG. 25, the network device 2500 includes a second communication unit 2501 and a second processing unit 2502.

The second communication unit 2501 configured to transmit first indication information, where the first indication information is used for determining that a first PUSCH is transmitted in a time domain in a manner of OCC spreading.

The second communication unit 2501 further configured to receive the first PUSCH transmitted by a terminal device.

The second processing unit 2502 is configured to despread the first PUSCH in the time domain in the manner of OCC spreading.

In some embodiments, the second processing unit 2502 is further configured to despread the first PUSCH in the time domain in the manner of OCC spreading, based on one or more of: a time-domain unit size for time-domain OCC spreading; an interval between data symbols associated with two adjacent OCC factors; a first OCC, where the first OCC is an OCC used for the time-domain OCC spreading; a first OCC length, where the first OCC length is a length of the first OCC; a first OCC set, where the first OCC set is an OCC set associated with the first OCC length; a first OCC index, where the first OCC index is used for indicating the first OCC; or a first DMRS port, where the first DMRS port is a DMRS port associated with the first OCC index.

In some embodiments, the time-domain unit size for the time-domain OCC spreading includes one of: N PUSCHs, where N is the first OCC length or N is 1; or, M data symbols, where M is an integer multiple of N.

In some embodiments, the interval between the data symbols associated with the two adjacent OCC factors includes one of: the interval between the data symbols associated with the two adjacent OCC factors is 1; the interval between the data symbols associated with the two adjacent OCC factors is 2; the interval between the data symbols associated with the two adjacent OCC factors is 4; the interval between the data symbols associated with the two adjacent OCC factors is the number of data symbols included in one PUSCH; the interval between the data symbols associated with the two adjacent OCC factors is a ratio of the number of data symbols included in the one PUSCH to the first OCC length; or the interval between the data symbols associated with the two adjacent OCC factors is a ratio of the number of data symbols included in the time-domain unit size for the time-domain OCC spreading to the first OCC length.

In some embodiments, the first OCC length is 2 and the first OCC set is: {{+1, +1}, {+1, -1}}.

In some embodiments, the first OCC length is 4, and the first OCC set is one of: {{+1, +1, +1, +1}, {+1, -1, +1, -1}, {+1, +1, -1, -1}, {+1, -1, -1, +1}}; or {{+1, +1, +1, +1}, {+1, -j, -1, +j}, {+1, -1, +1, -1}, {+1, +j, -1, -j} }.

In some embodiments, the first OCC length is N, and the first OCC set is determined according to the formula:

$$w_i(m) = e^{j 2\pi \phi(m)/N} \ .$$

Herein, $i$ denotes an OCC index in the first OCC set, $i$ ranges from 0 to N-1, $w_i(m)$ denotes an $m$-th OCC factor included in an $i$-th OCC, $m$ ranges from 0 to N-1, and $\phi(m)$ is a preset value determined based on $i$ and N.

In some embodiments, the second processing unit 2502 is further configured to despread the first PUSCH in the time domain in the manner of OCC spreading based on the first OCC, where the first OCC is an OCC determined from the first OCC set based on the first OCC index.

In some embodiments, the first indication information is used to determine one or more of: whether time-domain OCC spreading is enabled; a time-domain unit size for time-domain OCC spreading; an interval between data symbols associated with two adjacent OCC factors; a first OCC, where the first OCC is an OCC used for the time-domain OCC spreading; a first OCC length, where the first OCC length is a length of the first OCC; a first OCC set, where the first OCC set is an OCC set associated with the first OCC length; a first OCC index, where the first OCC index is used for indicating the first OCC; or a first DMRS port, where the first DMRS port is a DMRS port associated with the first OCC index.

In some embodiments, if the first indication information is configured to enable the time-domain OCC spreading, the first indication information is used for determining that the first PUSCH is transmitted in the time domain in the manner of OCC spreading; or if the first indication information is not configured to enable the time-domain OCC spreading or the first indication information is configured to disable the time-domain OCC spreading, the first indication information is used for determining that the first PUSCH is transmitted in the time domain without the OCC spreading.

In some embodiments, the first indication information is used to determine that the first PUSCH is transmitted in the time domain in the manner of OCC spreading, if the first indication information indicates one or more of: the time-domain unit size for the time-domain OCC spreading; the interval between the data symbols associated with the two adjacent OCC factors; the first OCC; the first OCC length; the first OCC set; the first OCC index; or the first DMRS port.

In some embodiments, if the first indication information does not indicate the time-domain unit size for the time-domain OCC spreading, the time-domain unit size for the time-domain OCC spreading is predefined; and/or, if the first indication information does not indicate the interval between the data symbols associated with the two adjacent OCC factors, the interval between the data symbols associated with the two adjacent OCC factors is predefined; and/or, if the first indication information does not indicate the first OCC length, the first OCC length is predefined; and/or, if the first indication information does not indicate the first OCC set, the first OCC set is predefined; and/or, if the first indication information does not indicate the first OCC index, the first OCC index is predefined; and/or, if the first indication information does not indicate the first DMRS port, the first DMRS port is predefined.

In some embodiments, the network device 2500 further includes a second determination unit configured to determine a size of a first TB transmitted in the first PUSCH, based on one or more of: a first OCC length, where the first OCC length is a length of a first OCC, and the first OCC is an OCC used for time-domain OCC spreading; the number of PRBs occupied by transmission of the first PUSCH; the number of data symbols in a time slot occupied by the transmission of the first PUSCH; or the number of time slots occupied by the transmission of the first PUSCH.

In some embodiments, the size of the first TB is determined based on the number of REs occupied by the first TB, where the number of REs occupied by the first TB is determined based on the number of PRBs occupied by the transmission of the first PUSCH, the number of data symbols in the time slot occupied by the transmission of the first PUSCH, the number of time slots occupied by the transmission of the first PUSCH, and the first OCC length.

In some embodiments, the first indication information is used to indicate one or more of: the number of PRBs occupied by the transmission of the first PUSCH; the number of data symbols in the time slot occupied by the transmission of the first PUSCH; or the number of time slots occupied by the transmission of the first PUSCH.

In some embodiments, if the first indication information does not indicate the number of time slots occupied by the transmission of the first PUSCH, the number of time slots occupied by the transmission of the first PUSCH is 1.

In some embodiments, the first indication information is transmitted through an RRC signaling; or, the first indication information is transmitted through a DCI; or, a part of the first indication information is transmitted through an RRC signaling, and a part of the first indication information is transmitted through a DCI.

In some embodiments, in a case where part or all of the first indication information is transmitted through the DCI, if the first PUSCH is a DCI-scheduled PUSCH, the part or all of the first indication information is transmitted a DCI for scheduling the first PUSCH; or, if the first PUSCH is a preconfigured CG-PUSCH, the part or all of the first indication information is transmitted through a DCI for activating the first PUSCH.

In some embodiments, the second processing unit 2502 is further configured to despread the first PUSCH in the time domain in the manner of OCC spreading based on a time-domain unit size for time-domain OCC spreading, where the time-domain unit size for the time-domain OCC spreading is N PUSCHs, and the number of repetitions of the first PUSCH in the time domain is P, and P is an integer multiple of N.

In some embodiments, the second processing unit 2502 is further configured to despread the first PUSCH in the time domain in the manner of OCC spreading based on a time-domain unit size for time-domain OCC spreading, where the time-domain unit size for the time-domain OCC spreading is M data symbols, the number of data symbols included in one PUSCH of the first PUSCH is Q, and Q is an integer multiple of M.

In some embodiments, the first indication information is further used for determining that the first PUSCH is transmitted in a frequency domain in a manner of OCC spreading, and the second processing unit 2502 is further configured to despread the first PUSCH in the frequency domain and the time domain in the manner of OCC spreading.

In an embodiment of the present disclosure, the second communication unit in the network device may be implemented by a receiver in the network device, and the second processing unit and the second determination unit in the network device may be implemented by a processor in the network device.

Those skilled in the art should understand that the related description of the above-described terminal device or network device according to the embodiments of the present disclosure can be understood with reference to the related description of the methods for channel transmission according to the embodiments of the present disclosure.

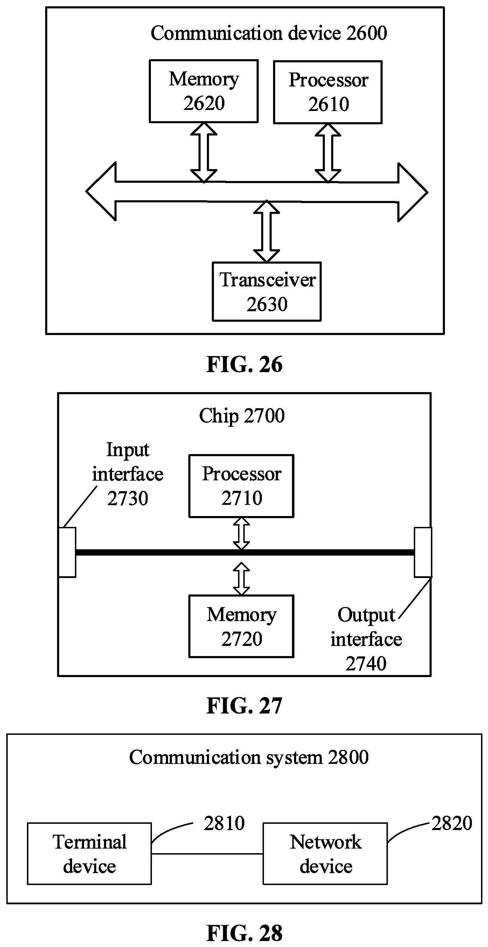

FIG. 26 is a structural diagram of a communication device 2600 according to an embodiment of the present disclosure. The communication device may be a terminal device or a network device. The communication device 2600 illustrated in FIG. 26 includes a processor 2610 that can call and run a computer program from a memory to implement the methods in the embodiments of the present disclosure.

Optionally, as illustrated in FIG. 26, the communication device 2600 may further include a memory 2620. Among them, the processor 2610 may call and run a computer program from the memory 2620 to implement the methods in the embodiments of the present disclosure.

The memory 2620 may be a separate device independent of the processor 2610 or may be integrated in the processor 2610.

Alternatively, as illustrated in FIG. 26, the communication device 2600 may further include a transceiver 2630, and the processor 2610 may control the transceiver 2630 to communicate with other devices, specifically, may transmit information or data or receive information or data to/from other devices.

The transceiver 2630 may include a transmitter and a receiver. The transceiver 2630 may further include antennas, and the number of antennas may be one or more.

Optionally, the communication device 2600 may be a network device according to the embodiments of the present disclosure, and the communication device 2600 may implement the corresponding processes implemented by the network device in each method according to the embodiments of the present disclosure, and will not be described herein for the sake of brevity.

Optionally, the communication device 2600 may be a mobile terminal/terminal device according to the embodiments of the present disclosure, and the communication device 2600 may implement the corresponding processes implemented by the mobile terminal/terminal device in each method according to the embodiments of the present disclosure, and will not be repeated here for the sake of simplicity.

FIG. 27 is a structural diagram of a chip according to an embodiment of the present disclosure. The chip 2700 illustrated in FIG. 27 includes a processor 2710, and the processor 2710 can call and run a computer program from a memory to implement the methods in the embodiments of the present disclosure.

Optionally, as illustrated in FIG. 27, the chip 2700 may further include a memory 2720. Here, the processor 2710 may call and run a computer program from the memory 2720 to implement the methods in the embodiments of the present disclosure.

The memory 2720 may be a separate device independent of the processor 2710 or may be integrated in the processor 2710.

Optionally, the chip 2700 may further include an input interface 2730. The processor 2710 may control the input interface 2730 to communicate with other devices or chips, specifically, may acquire information or data transmitted by other devices or chips.

Optionally, the chip 2700 may further include an output interface 2740. The processor 2710 may control the output interface 2740 to communicate with other devices or chips, specifically, may output information or data to other devices or chips.

Optionally, the chip can be applied to the network device in the embodiments of the present disclosure, and the chip can implement the corresponding processes implemented by the network device in each method of the embodiments of the present disclosure, and will not be repeated here for the sake of brevity.

Optionally, the chip can be applied to the mobile terminal/terminal device in the embodiments of the present disclosure, and the chip can implement the corresponding processes implemented by the mobile terminal/terminal device in each method of the embodiments of the present disclosure, and will not be repeated here for the sake of brevity.

It should be understood that the chip mentioned in the embodiments of the present disclosure may also be referred to as a system-level chip, a system-on-chip, a chip system, or a system-on-a-chip (SoC).

FIG. 28 is a block diagram of a communication system 2800 according to an embodiment of the present disclosure. As illustrated in FIG. 28, the communication system 2800 includes a terminal device 2810 and a network device 2820.

The terminal device 2810 may be used to implement the corresponding functions implemented by the terminal device in the above-described methods, and the network device 2820 may be used to implement the corresponding functions implemented by the network device in the above-described methods, which will not be described herein for the sake of brevity.

It should be understood that the processor in the embodiments of the disclosure may be an integrated circuit chip having signal processing capability. In implementation, the various operations of the above method embodiments may be accomplished by integrated logic circuit of hardware or instructions in the form of software in a processor. The processor above may include: a general purpose processor, a digital signal processor (DSP), an application specific integrated circuit (ASIC), a field programmable gate array (FPGA) or other programmable logic devices, discrete gate or transistor logic devices, discrete hardware components. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a random-access memory (RAM), a flash memory, a read-only memory (ROM), a programmable ROM (PROM) or an electrically erasable EPROM (EEPROM), a register and other storage medium mature in the art. The storage medium is located in the memory, and the processor reads information in the memory and completes the operations of the above methods in combination with its hardware.

It is understood that the memory in embodiments of the present disclosure may be volatile memory or non-volatile memory or may include both volatile and non-volatile memory. The non-volatile memory may be an ROM, a PROM, an erasable PROM (EPROM), an EEPROM, or a flash memory. The volatile memory may be an RAM which serves as an external cache. By way of illustration but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memory of the systems and methods described herein is intended to include but not be limited to these and any other suitable types of memories.

It should be understood that the memory described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

An embodiment of the disclosure also provides a computer-readable storage medium for storing a computer program.

Optionally, the computer-readable storage medium may be applied to the network device in the embodiments of the disclosure, and the computer program causes the computer to execute corresponding processes implemented by the network device in various methods of the embodiments of the present disclosure, which are not elaborated here for the sake of brevity.

Optionally, the computer-readable storage medium may be applied to the mobile terminal/terminal device in the embodiments of the disclosure, and the computer program causes the computer to execute corresponding processes implemented by the mobile terminal/terminal device in various methods of the embodiments of the present disclosure, which are not elaborated here for the sake of brevity.

An embodiment of the disclosure also provides a computer program product including computer program instructions.

Optionally, the computer program product may be applied to the network device in the embodiments of the disclosure, and the computer program instructions causes the computer to execute corresponding processes implemented by the network device in various methods of the embodiments of the present disclosure, which are not elaborated here for the sake of brevity.

Optionally, the computer program product may be applied to the mobile terminal/terminal device in the embodiments of the disclosure, and the computer program instructions causes the computer to execute corresponding processes implemented by the mobile terminal/terminal device in various methods of the embodiments of the present disclosure, which are not elaborated here for the sake of brevity.

An embodiment of the disclosure also provides a computer program.

Optionally, the computer program may be applied to the network device in the embodiments of the disclosure, and the computer program causes a computer to execute corresponding processes implemented by the network device in various methods of the embodiments of the present disclosure when the computer program is run on the computer, which are not elaborated here for the sake of brevity.

Optionally, the computer program may be applied to the mobile terminal/terminal device in the embodiments of the disclosure, and the computer program causes a computer to execute corresponding processes implemented by the mobile terminal/terminal device in various methods of the embodiments of the present disclosure when the computer program is run on the computer, which are not elaborated here for the sake of brevity.

Those of ordinary skill in the art would appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use a different method for each particular application to implement the described functionality, but such implementation should not be considered outside the scope of the present disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

In several embodiments provided in the present disclosure, it should be understood that the disclosed systems, devices and methods may be implemented in other ways. For example, the above-described embodiments of the devices are only schematic. For example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interfaces, devices or units, and may be electrical, mechanical or other forms.

The units illustrated as separate components may or may not be physically separated, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

The functions may be stored in a computer readable storage medium if implemented in the form of software functional units and sold or used as stand-alone products. In view of this understanding, the technical solutions of the present disclosure in essence, or the part that contributes to the related art, or the part of the technical solutions can be embodied in the form of a software product. The computer software product is stored in a storage medium and includes instructions that enable a computer device (which may be a personal computer, server, network device, or the like) to perform all or part of the operations of the methods described in various embodiments of the present disclosure. The aforementioned storage medium includes a USB flash disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any variation or substitution readily conceivable by those skilled in the art within the scope of the technology disclosed in the present disclosure shall be covered by the scope of protection of the present disclosure. Therefore, the scope of protection of the present disclosure should be subject to the scope of protection of the claims.

**Claims**

1. A method for channel transmission, comprising:

   receiving, by a terminal device, first indication information transmitted by a network device, wherein the first indication information is used for determining that a first physical uplink shared channel (PUSCH) is transmitted in a time domain in a manner of orthogonal cover code (OCC) spreading; and
   spreading, by the terminal device, the first PUSCH in the time domain in the manner of OCC spreading, and transmitting the first PUSCH to the network device.

2. The method of claim 1, wherein spreading, by the terminal device, the first PUSCH in the time domain in the manner of OCC spreading comprises:
   spreading, by the terminal device, the first PUSCH in the time domain in the manner of OCC spreading, based on one or more of:

   a time-domain unit size for time-domain OCC spreading;
   an interval between data symbols associated with two adjacent OCC factors;
   a first OCC, wherein the first OCC is an OCC used for the time-domain OCC spreading;
   a first OCC length, wherein the first OCC length is a length of the first OCC;
   a first OCC set, wherein the first OCC set is an OCC set associated with the first OCC length;
   a first OCC index, wherein the first OCC index is used for indicating the first OCC; or
   a first demodulation reference signal (DMRS) port, wherein the first DMRS port is a DMRS port associated with the first OCC index.

3. The method of claim 2, wherein the time-domain unit size for the time-domain OCC spreading comprises one of:

   N PUSCHs, wherein N is the first OCC length or N is 1; or
   M data symbols, wherein M is an integer multiple of N.

4. The method of claim 2 or 3, wherein the interval between the data symbols associated with the two adjacent OCC factors comprises one of:

   the interval between the data symbols associated with the two adjacent OCC factors is 1;
   the interval between the data symbols associated with the two adjacent OCC factors is 2;
   the interval between the data symbols associated with the two adjacent OCC factors is 4;
   the interval between the data symbols associated with the two adjacent OCC factors is a number of data symbols comprised in one PUSCH;
   the interval between the data symbols associated with the two adjacent OCC factors is a ratio of the number of data symbols comprised in the one PUSCH to the first OCC length; or
   the interval between the data symbols associated with the two adjacent OCC factors is a ratio of a number of data symbols comprised in the time-domain unit size for the time-domain OCC spreading to the first OCC length.

5. The method of any one of claims 2 to 4, wherein the first OCC length is 2, and the first OCC set is: {{+1, +1}, {+1, -1}}.

6. The method of any one of claims 2 to 4, wherein the first OCC length is 4, and the first OCC set is one of:

   {{+1, +1, +1, +1}, {+1, -1, +1, -1}, {+1, +1, -1, -1}, {+1, -1, -1, +1}}; or
   {{+1, +1, +1, +1}, {+1, -j, -1, +j}, {+1, -1, +1, -1}, {+1, +j, -1, -j}}.

7. The method of any one of claims 2 to 4, wherein the first OCC length is N, and the first OCC set is determined according to the following formula:

$$w_i(m) = e^{j2\pi\phi(m)/N}$$

wherein, *i* denotes an OCC index in the first OCC set, *i* ranges from 0 to N-1, $w_i(m)$ denotes an *m-th* OCC factor comprised in an *i-th* OCC, *m* ranges from 0 to N-1, and $\phi(m)$ is a preset value determined based on *i* and N.

8. The method of any one of claims 2 to 7, wherein spreading, by the terminal device, the first PUSCH in the time domain in the manner of OCC spreading comprises:
   spreading, by the terminal device, the first PUSCH in the time domain in the manner of OCC spreading based on the first OCC, wherein the first OCC is an OCC determined from the first OCC set based on the first OCC index.

9. The method of any one of claims 1 to 8, wherein the first indication information is used for determining one or more of:

   whether time-domain OCC spreading is enabled;
   a time-domain unit size for the time-domain OCC spreading;
   an interval between data symbols associated with two adjacent OCC factors;
   a first OCC, wherein the first OCC is an OCC used for the time-domain OCC spreading;
   a first OCC length, wherein the first OCC length is a length of the first OCC;
   a first OCC set, wherein the first OCC set is an OCC set associated with the first OCC length;
   a first OCC index, wherein the first OCC index is used for indicating the first OCC; or
   a first demodulation reference signal (DMRS) port, wherein the first DMRS port is a DMRS port associated with the first OCC index.

10. The method of claim 9, wherein

    when the first indication information is configured to enable the time-domain OCC spreading, the first indication information is used for determining that the first PUSCH is transmitted in the time domain in the manner of OCC spreading; or
    when the first indication information is not configured to enable the time-domain OCC spreading or the first indication information is configured to disable the time-domain OCC spreading, the first indication information is used for determining that the first PUSCH is transmitted in the time domain without the OCC spreading.

11. The method of claim 9, wherein
    the first indication information is used for determining that the first PUSCH is transmitted in the time domain in the manner of OCC spreading, when the first indication information indicates one or more of:

    the time-domain unit size for the time-domain OCC spreading;
    the interval between the data symbols associated with the two adjacent OCC factors;
    the first OCC;
    the first OCC length;
    the first OCC set;
    the first OCC index; or
    the first DMRS port.

12. The method of any one of claims 9 to 11, wherein

    when the first indication information does not indicate the time-domain unit size for the time-domain OCC spreading, the time-domain unit size for the time-domain OCC spreading is predefined; and/or,
    when the first indication information does not indicate the interval between the data symbols associated with the two adjacent OCC factors, the interval between the data symbols associated with the two adjacent OCC factors is predefined; and/or,
    when the first indication information does not indicate the first OCC length, the first OCC length is predefined; and/or,
    when the first indication information does not indicate the first OCC set, the first OCC set is predefined; and/or,
    when the first indication information does not indicate the first OCC index, the first OCC index is predefined; and/or,
    when the first indication information does not indicate the first DMRS port, the first DMRS port is predefined.

13. The method of any one of claims 1 to 12, further comprising:
determining, by the terminal device, a size of a first transport block (TB), the first TB being a TB transmitted in the first PUSCH, based on one or more of:

a first OCC length, wherein the first OCC length is a length of a first OCC, and the first OCC is an OCC used for time-domain OCC spreading;
a number of physical resource blocks (PRBs) occupied by transmission of the first PUSCH;
a number of data symbols in a time slot occupied by the transmission of the first PUSCH; or
a number of time slots occupied by the transmission of the first PUSCH.

14. The method of claim 13, wherein the size of the first TB is determined based on a number of resource elements (REs) occupied by the first TB, wherein the number of REs occupied by the first TB is determined based on the number of PRBs occupied by the transmission of the first PUSCH, the number of data symbols in the time slot occupied by the transmission of the first PUSCH, the number of time slots occupied by the transmission of the first PUSCH, and the first OCC length.

15. The method of claim 13 or 14, wherein the first indication information is used for indicating one or more of:

the number of PRBs occupied by the transmission of the first PUSCH;
the number of data symbols in the time slot occupied by the transmission of the first PUSCH; or
the number of time slots occupied by the transmission of the first PUSCH.

16. The method of claim 15, wherein when the first indication information does not indicate the number of time slots occupied by the transmission of the first PUSCH, the number of time slots occupied by the transmission of the first PUSCH is 1.

17. The method of any of claims 1 to 16, wherein the first indication information is transmitted through radio resource control (RRC) signaling; or,

the first indication information is transmitted through downlink control information (DCI); or,
a part of the first indication information is transmitted through radio resource control (RRC) signaling, and a part of the first indication information is transmitted through downlink control information (DCI).

18. The method of claim 17, wherein, in a case where part or all of the first indication information is transmitted through the DCI, when the first PUSCH is a DCI-scheduled PUSCH, the part or all of the first indication information is transmitted through a DCI for scheduling the first PUSCH; or,
when the first PUSCH is a preconfigured configured grant PUSCH (CG-PUSCH), the part or all of the first indication information is transmitted through a DCI for activating the first PUSCH.

19. The method of any one of claims 1 to 18, wherein spreading, by the terminal device, the first PUSCH in the time domain in the manner of OCC spreading comprises:
spreading, by the terminal device, the first PUSCH in the time domain in the manner of OCC spreading based on a time-domain unit size for time-domain OCC spreading, wherein the time-domain unit size for the time-domain OCC spreading is N PUSCHs, a number of repetitions of the first PUSCH in the time domain is P, and P is an integer multiple of N.

20. The method of any one of claims 1 to 18, wherein spreading, by the terminal device, the first PUSCH in the time domain in the manner of OCC spreading comprises:
spreading, by the terminal device, the first PUSCH in the time domain in the manner of OCC spreading based on a time-domain unit size for time-domain OCC spreading, wherein the time-domain unit size for the time-domain OCC spreading is M data symbols, a number of data symbols comprised in one PUSCH of the first PUSCH is Q, and Q is an integer multiple of M.

21. The method of any of claims 1 to 20, wherein the first indication information is further used for determining that the first PUSCH is transmitted in a frequency domain in a manner of OCC spreading, and wherein spreading, by the terminal device, the first PUSCH in the time domain in the manner of OCC spreading comprises:
spreading, by the terminal device, the first PUSCH in the time domain and the frequency domain in the manner of OCC spreading.

22. A method for channel transmission, comprising:

transmitting, by a network device, first indication information to a terminal device, wherein the first indication information is used for determining that a first physical uplink shared channel (PUSCH) is transmitted in a time domain in a manner of orthogonal cover code (OCC) spreading; and
receiving, by the network device, the first PUSCH transmitted by the terminal device, and despreading the first PUSCH in the time domain in the manner of OCC spreading.

23. The method of claim 22, wherein receiving, by the network device, the first PUSCH transmitted by the terminal device, and despreading the first PUSCH in the time domain in the manner of OCC spreading comprises:
despreading, by the network device, the first PUSCH in the time domain in the manner of OCC spreading, based on one or more of:

a time-domain unit size for time-domain OCC spreading;
an interval between data symbols associated with two adjacent OCC factors;
a first OCC, wherein the first OCC is an OCC used for the time-domain OCC spreading;
a first OCC length, wherein the first OCC length is a length of the first OCC;
a first OCC set, wherein the first OCC set is an OCC set associated with the first OCC length;
a first OCC index, wherein the first OCC index is used for indicating the first OCC; or
a first demodulation reference signal (DMRS) port, wherein the first DMRS port is a DMRS port associated with the first OCC index.

24. The method of claim 23, wherein the time-domain unit size for the time-domain OCC spreading comprises one of:

N PUSCHs, wherein N is the first OCC length or N is 1; or
M data symbols, wherein M is an integer multiple of N.

25. The method of claim 23 or 24, wherein the interval between the data symbols associated with the two adjacent OCC factors comprises one of:

the interval between the data symbols associated with the two adjacent OCC factors is 1;
the interval between the data symbols associated with the two adjacent OCC factors is 2;
the interval between the data symbols associated with the two adjacent OCC factors is 4;
the interval between the data symbols associated with the two adjacent OCC factors is a number of data symbols comprised in one PUSCH;
the interval between the data symbols associated with the two adjacent OCC factors is a ratio of the number of data symbols comprised in the one PUSCH to the first OCC length; or
the interval between the data symbols associated with the two adjacent OCC factors is a ratio of a number of data symbols comprised in the time-domain unit size for the time-domain OCC spreading to the first OCC length.

26. The method of any one of claims 23 to 25, wherein the first OCC length is 2, and the first OCC set is: {{+1, +1}, {+1, -1}}.

27. The method of any one of claims 23 to 25, wherein the first OCC length is 4, and the first OCC set is one of:

{{+1, +1, +1, +1}, {+1, -1, +1, -1}, {+1, +1, -1, -1}, {+1, -1, -1, +1}}; or
{{+1, +1, +1, +1}, {+1, -j, -1, +j}, {+1, -1, +1, -1}, {+1, +j, -1, -j}}.

28. The method of any one of claims 23 to 25, wherein the first OCC length is N, and the first OCC set is determined according to the following formula:

$$w_i(m) = e^{j2\pi\phi(m)/N}$$

wherein, $i$ denotes an OCC index in the first OCC set, $i$ ranges from 0 to N-1, $w_i(m)$ denotes an $m$-th OCC factor comprised in an $i$-th OCC, $m$ ranges from 0 to N-1, and $\phi(m)$ is a preset value determined based on i and N.

29. The method of any one of claims 23 to 28, wherein despreading, by the network device, the first PUSCH in the time domain in the manner of OCC spreading comprises:

despreading, by the network device, the first PUSCH in the time domain in the manner of OCC spreading based on the first OCC, wherein the first OCC is an OCC determined from the first OCC set based on the first OCC index.

30. The method of any one of claims 22 to 29, wherein the first indication information is used for determining one or more of:

whether time-domain OCC spreading is enabled;
a time-domain unit size for time-domain OCC spreading;
an interval between data symbols associated with two adjacent OCC factors;
a first OCC, wherein the first OCC is an OCC used for the time-domain OCC spreading;
a first OCC length, wherein the first OCC length is a length of the first OCC;
a first OCC set, wherein the first OCC set is an OCC set associated with the first OCC length;
a first OCC index, wherein the first OCC index is used for indicating the first OCC; or
a first demodulation reference signal (DMRS) port, wherein the first DMRS port is a DMRS port associated with the first OCC index.

31. The method of claim 30, wherein

when the first indication information is configured to enable the time-domain OCC spreading, the first indication information is used for determining that the first PUSCH is transmitted in the time domain in the manner of OCC spreading; or
when the first indication information is not configured to enable the time-domain OCC spreading or the first indication information is configured to disable the time-domain OCC spreading, the first indication information is used for determining that the first PUSCH is transmitted in the time domain without the OCC spreading.

32. The method of claim 30, wherein,
the first indication information is used for determining that the first PUSCH is transmitted in the time domain in the manner of OCC spreading, when the first indication information indicates one or more of:

the time-domain unit size for the time-domain OCC spreading;
the interval between the data symbols associated with the two adjacent OCC factors;
the first OCC;
the first OCC length;
the first OCC set;
the first OCC index; or
the first DMRS port.

33. The method of any one of claims 30 to 32, wherein

when the first indication information does not indicate the time-domain unit size for the time-domain OCC spreading, the time-domain unit size for the time-domain OCC spreading is predefined; and/or,
when the first indication information does not indicate the interval between the data symbols associated with the two adjacent OCC factors, the interval between the data symbols associated with the two adjacent OCC factors is predefined; and/or,
when the first indication information does not indicate the first OCC length, the first OCC length is predefined; and/or,
when the first indication information does not indicate the first OCC set, the first OCC set is predefined; and/or,
when the first indication information does not indicate the first OCC index, the first OCC index is predefined; and/or,
when the first indication information does not indicate the first DMRS port, the first DMRS port is predefined.

34. The method of any one of claims 22 to 33, further comprising:
determining, by the network device, a size of a first transport block (TB), the first TB being a TB transmitted in the first PUSCH, based on one or more of:

a first OCC length, wherein the first OCC length is a length of a first OCC, and the first OCC is an OCC used for time-domain OCC spreading;
a number of physical resource blocks (PRBs) occupied by transmission of the first PUSCH;

a number of data symbols in a time slot occupied by the transmission of the first PUSCH; or
a number of time slots occupied by the transmission of the first PUSCH.

35. The method of claim 34, wherein the size of the first TB is determined based on a number of resource elements (REs) occupied by the first TB, wherein the number of REs occupied by the first TB is determined based on the number of PRBs occupied by the transmission of the first PUSCH, the number of data symbols in the time slot occupied by the transmission of the first PUSCH, the number of time slots occupied by the transmission of the first PUSCH, and the first OCC length.

36. The method of claim 34 or 35, wherein the first indication information is used for indicating one or more of:

the number of PRBs occupied by the transmission of the first PUSCH;
the number of data symbols in the time slot occupied by the transmission of the first PUSCH; or
the number of time slots occupied by the transmission of the first PUSCH.

37. The method of claim 36, wherein when the first indication information does not indicate the number of time slots occupied by the transmission of the first PUSCH, the number of time slots occupied by the transmission of the first PUSCH is 1.

38. The method of any of claims 22 to 37, wherein the first indication information is transmitted through radio resource control (RRC) signaling; or,

the first indication information is transmitted through downlink control information (DCI); or,
a part of the first indication information is transmitted through radio resource control (RRC) signaling, and a part of the first indication information is transmitted through downlink control information (DCI).

39. The method of claim 38, wherein, in a case where part or all of the first indication information is transmitted through the DCI, when the first PUSCH is a DCI-scheduled PUSCH, the part or all of the first indication information is transmitted a DCI for scheduling the first PUSCH; or,
when the first PUSCH is a preconfigured configured grant PUSCH (CG-PUSCH), the part or all of the first indication information is transmitted through a DCI for activating the first PUSCH.

40. The method of any one of claims 22 to 39, wherein despreading, by the network device, the first PUSCH in the time domain in the manner of OCC spreading comprises:
despreading, by the network device, the first PUSCH in the time domain in the manner of OCC spreading based on a time-domain unit size for time-domain OCC spreading, wherein the time-domain unit size for the time-domain OCC spreading is N PUSCHs, and a number of repetitions of the first PUSCH in the time domain is P, and P is an integer multiple of N.

41. The method of any one of claims 22 to 39, wherein despreading, by the network device, the first PUSCH in the time domain in the manner of OCC spreading comprises:
despreading, by the network device, the first PUSCH in the time domain in the manner of OCC spreading based on a time-domain unit size for time-domain OCC spreading, wherein the time-domain unit size for the time-domain OCC spreading is M data symbols, a number of data symbols comprised in one PUSCH of the first PUSCH is Q, and Q is an integer multiple of M.

42. The method of any of claims 22 to 41, wherein the first indication information is further used for determining that the first PUSCH is transmitted in a frequency domain in a manner of OCC spreading, and wherein despreading, by the network device, the first PUSCH in the time domain in the manner of OCC spreading comprises:
despreading, by the network device, the first PUSCH in the time domain and the frequency domain in the manner of OCC spreading.

43. A terminal device, comprising:

a first communication unit, configured to receive first indication information transmitted by a network device, wherein the first indication information is used for determining that a first physical uplink shared channel (PUSCH) is transmitted in a time domain in a manner of orthogonal cover code (OCC) spreading; and
a first processing unit, configured to spread the first PUSCH in the time domain in the manner of OCC spreading;

wherein
the first communication unit is further configured to transmit the first PUSCH to the network device.

44. A network device, comprising:

a second communication unit, configured to transmit first indication information to a terminal device, wherein the first indication information is used for determining that a first physical uplink shared channel (PUSCH) is transmitted in a time domain in a manner of orthogonal cover code (OCC) spreading;
the second communication unit is further configured to receive the first PUSCH transmitted by the terminal device; and
a second processing unit, configured to despread the first PUSCH in the time domain in the manner of OCC spreading.

45. A terminal device, comprising: a processor and a memory, wherein the memory is configured to store a computer program and the processor is configured to invoke and execute the computer program stored in the memory to perform the method of any one of claims 1 to 21.

46. A network device, comprising: a processor and a memory, wherein the memory is configured to store a computer program and the processor is configured to invoke and execute the computer program stored in the memory to perform the method of any one of claims 22 to 42.

47. A chip, comprising: a processor for invoking and executing a computer program from a memory such that a device equipped with the chip performs the method of any one of claims 1 to 21 or performs the method of any one of claims 22 to 42.

48. A computer-readable storage medium for storing a computer program that causes a computer to perform the method of any one of claims 1 to 21 or perform the method of any one of claims 22 to 42.

49. A computer program product, comprising computer program instructions that cause a computer to perform the method of any one of claims 1 to 21, or perform the method of any one of claims 22 to 42.

50. A computer program for causing a computer to perform the method of any one of claims 1 to 21 or perform the method of any one of claims 22 to 42.

**FIG. 1**

**FIG. 2**

202

201

203

**FIG. 3**

CPU401-1

CPU401-1

Switch module 402-1

Switch module 402-2

AP1  AP2  AP3  AP4  AP5  AP6  AP7  AP8  AP9  AP10

Channel

UE403

**FIG. 4**

**FIG. 5**

**FIG. 6**

A terminal device receives first indication information transmitted by a network device, here, the first indication information is used for determining that a first physical uplink shared channel (PUSCH) is transmitted in a time domain in a manner of orthogonal cover code (OCC) spreading — S701

The terminal device spreads the first PUSCH in the time domain in the manner of OCC spreading and transmits the first PUSCH to the network device — S702

**FIG. 7**

Time domain

$w(0)$ $w(1)$ $w(2)$ $w(3)$

**FIG. 8**

Time domain

+1 +1 +1 +1 +1 +1 +1 +1 +1 +1 +1 +1

Orthogonal code{+1, +1}

+1 -1 +1 -1 +1 -1 +1 -1 +1 -1 +1 -1

Orthogonal code{+1, -1}

**FIG. 9**

Time domain

+1 +1 +1 +1

Orthogonal code{+1, +1, +1, +1}

+1 -1 +1 -1

Orthogonal code{+1, -1, +1, -1}

+1 +1 -1 -1

Orthogonal code{+1, +1, -1, -1}

+1 -1 -1 +1

Orthogonal code{+1, -1, -1, +1}

**FIG. 10**

Time domain

+1 +1 +1 +1 +1 +1 +1 +1 +1 +1 +1 +1

Orthogonal code{+1, +1, +1, +1}

+1 -1 +1 -1 +1 -1 +1 -1 +1 -1 +1 -1

Orthogonal code{+1, -1, +1, -1}

+1 +1 -1 -1 +1 +1 -1 -1 +1 +1 -1 -1

Orthogonal code{+1, +1, -1, -1}

+1 -1 -1 +1 +1 -1 -1 +1 +1 -1 -1 +1

Orthogonal code{+1, -1, -1, +1}

**FIG. 11**

Time domain

+1 +1 +1 +1

Orthogonal code{+1, +1, +1, +1}

+1 -j -1 +j

Orthogonal code{+1, -j, -1, +j}

+1 -1 +1 -1

Orthogonal code{+1, -1, +1, -1}

+1 +j -1 -j

Orthogonal code{+1, +j, -1, -j}

**FIG. 12**

Time domain →

+1 +1 +1 +1 +1 +1 +1 +1 +1 +1 +1 +1

Orthogonal code{+1, +1, +1, +1}

+1 -j -1 +j +1 -j -1 +j +1 -j -1 +j

Orthogonal code{+1, -j, -1, +j}

+1 -1 +1 -1 +1 -1 +1 -1 +1 -1 +1 -1

Orthogonal code{+1, -1, +1, -1}

+1 +j -1 -j +1 +j -1 -j +1 +j -1 -j

Orthogonal code{+1, +j, -1, -j}

## FIG. 13

EP 4 765 655 A1

Time domain

Frequency domain

Data symbols occupied by one PUSCH transmission

ime-domain unit for time-domain OCC spreading | Time-domain unit for time-domain OCC spreading

| $w(0)$ | $w(1)$ | $w(2)$ | $w(3)$ | $w(0)$ | $w(1)$ | $w(2)$ | $w(3)$ |
|---|---|---|---|---|---|---|---|
| Data1 | Data1 | Data1 | Data1 | Data2 | Data2 | Data2 | Data2 |

Interval between data symbols associated
with two adjacent OCC factors

**FIG. 14**

Time
domain

Data symbols occupied by one PUSCH transmission

Time-domain unit for time-domain OCC spreading

Frequency
domain

| $w(0)$ | $w(1)$ | $w(2)$ | $w(3)$ |
|---|---|---|---|
| Data1 | Data1 | Data1 | Data1 |

nterval between data symbols associated
with two adjacent OCC factors

**FIG. 15**

Time domain

Frequency domain

Data symbols occupied by one PUSCH transmission

Time-domain unit for time-domain OCC spreading

Time-domain unit for time-domain OCC spreading

| $w(0)$ | $w(1)$ | $w(2)$ | $w(3)$ | $w(0)$ | $w(1)$ | $w(2)$ | $w(3)$ |
|---|---|---|---|---|---|---|---|
| Data1 is associated with RV0 | Data1 is associated with RV0 | Data1 is associated with RV0 | Data1 is associated with RV0 | Data1 is associated with RV2 | Data1 is associated with RV2 | Data1 is associated with RV2 | Data1 is associated with RV2 |

Interval between data symbols associated with two adjacent OCC factors

**FIG. 16**

FIG. 17

Time domain

Data symbols occupied by one PUSCH transmission

Frequency domain

Time-domain unit for time-domain OCC spreading

$w(0)$ | $w(1)$ | $w(2)$ | $w(3)$

Data1 is associated with RV0

Time-domain unit for time-domain OCC spreading

$w(0)$ | $w(1)$ | $w(2)$ | $w(3)$

Data1 is associated with RV2

Interval between data symbols associated with two adjacent OCC factors

FIG. 18

**FIG. 19**

EP 4 765 655 A1

Frequency domain →

|  | | First PRB | | | | | | | | | | | Second PRB | | | | | | | | | | | |
|---|---|---|---|---|---|---|---|---|---|---|---|---|---|---|---|---|---|---|---|---|---|---|---|---|

**First PUSCH (RV0)**

w(0)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|----|----|----|----|----|----|----|----|----|----|----|----|----|----|
| 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |

w(1)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|----|----|----|----|----|----|----|----|----|----|----|----|----|----|
| 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |

**Second PUSCH (RV2)**

w(0)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|----|----|----|----|----|----|----|----|----|----|----|----|----|----|
| 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |

w(1)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|----|----|----|----|----|----|----|----|----|----|----|----|----|----|
| 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |

**Third PUSCH (RV3)**

w(0)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|----|----|----|----|----|----|----|----|----|----|----|----|----|----|
| 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |

w(1)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|----|----|----|----|----|----|----|----|----|----|----|----|----|----|
| 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |

**Fourth PUSCH (RV1)**

w(0)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|----|----|----|----|----|----|----|----|----|----|----|----|----|----|
| 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |

w(1)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|----|----|----|----|----|----|----|----|----|----|----|----|----|----|
| 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |

Time domain ↓

**FIG. 20**

Frequency domain →

|  |  | First PRB | | | | | | | | | | | | Second PRB | | | | | | | | | | | |
|---|---|---|---|---|---|---|---|---|---|---|---|---|---|---|---|---|---|---|---|---|---|---|---|---|---|
| First PUSCH (RV0) | w(0) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|  | w(1) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|  | w(0) | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
|  | w(1) | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
| Second PUSCH (RV2) | w(0) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|  | w(1) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|  | w(0) | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
|  | w(1) | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
| Third PUSCH (RV3) | w(0) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|  | w(1) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|  | w(0) | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
|  | w(1) | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
| Fourth PUSCH (RV1) | w(0) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|  | w(1) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|  | w(0) | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
|  | w(1) | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |

Time domain ↓

**FIG. 21**

EP 4 765 655 A1

**FIG. 22A**

FIG. 22B

A network device transmits first indication information to a terminal device, here, the first indication information is used for determining that a first physical uplink shared channel (PUSCH) is transmitted in a frequency domain in a manner of orthogonal cover code (OCC) spreading

S2301

The network device receives the first PUSCH transmitted by the terminal device, and despreads the first PUSCH in the frequency domain in the manner of OCC spreading

S2302

**FIG. 23**

Terminal device 2400

First communication unit 2401

First processing unit 2402

**FIG. 24**

Network device 2500

Second communication unit 2501

Second processing unit 2501

**FIG. 25**

Communication device 2600

Memory
2620

Processor
2610

Transceiver
2630

**FIG. 26**

Chip 2700

Input
interface
2730

Processor
2710

Memory
2720

Output
interface
2740

**FIG. 27**

Communication system 2800

Terminal
device

2810

Network
device

2820

**FIG. 28**

## INTERNATIONAL SEARCH REPORT

| International application No. |
| --- |
| **PCT/CN2023/141268** |

### A. CLASSIFICATION OF SUBJECT MATTER

H04B1/707(2011.01)i; H04L27/26(2006.01)i

According to International Patent Classification (IPC) or to both national classification and IPC

### B. FIELDS SEARCHED

Minimum documentation searched (classification system followed by classification symbols)

IPC:H04B,H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP; IEEE: 指示信息, 物理上行共享信道, 正交掩码, 扩频, 时域, 频域, 解调参考信号, indication information, PUSCH, OCC, spread frequency, time domain, frequency domain, DMRS

### C. DOCUMENTS CONSIDERED TO BE RELEVANT

| Category* | Citation of document, with indication, where appropriate, of the relevant passages | Relevant to claim No. |
| --- | --- | --- |
| X | WO 2022155082 A1 (INTEL CORP.) 21 July 2022 (2022-07-21) description, page 2, line 19-page 33, line 17, and figures 1-10 | 1-50 |
| X | US 2018152271 A1 (LG ELECTRONICS INC.) 31 May 2018 (2018-05-31) description, paragraphs [0050]-[0203], and figures 1-21 | 1-50 |
| A | CN 114071723 A (HUAWEI TECHNOLOGIES CO., LTD.) 18 February 2022 (2022-02-18) entire document | 1-50 |
| A | CN 111787615 A (BEIJING SAMSUNG TELECOM R&D CENTER et al.) 16 October 2020 (2020-10-16) entire document | 1-50 |
| A | US 2018109285 A1 (NTT DOCOMO INC.) 19 April 2018 (2018-04-19) entire document | 1-50 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **16 August 2024** | **22 August 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/141268**

| Patent document cited in search report | | | Publication date (day/month/year) | Patent family member(s) | | | Publication date (day/month/year) |
|---|---|---|---|---|---|---|---|
| WO | 2022155082 | A1 | 21 July 2022 | None | | | |
| US | 2018152271 | A1 | 31 May 2018 | WO | 2016190633 | A1 | 01 December 2016 |
| CN | 114071723 | A | 18 February 2022 | WO | 2022022579 | A1 | 03 February 2022 |
| | | | | KR | 20230041054 | A | 23 March 2023 |
| | | | | EP | 4187800 | A1 | 31 May 2023 |
| | | | | US | 2023171059 | A1 | 01 June 2023 |
| | | | | EP | 4187800 | A4 | 10 January 2024 |
| CN | 111787615 | A | 16 October 2020 | WO | 2020204637 | A1 | 08 October 2020 |
| | | | | US | 2022210816 | A1 | 30 June 2022 |
| US | 2018109285 | A1 | 19 April 2018 | JPWO | 2016163501 | A1 | 15 March 2018 |
| | | | | EP | 3282608 | A1 | 14 February 2018 |
| | | | | EP | 3282608 | A4 | 05 December 2018 |
| | | | | WO | 2016163501 | A1 | 13 October 2016 |

Form PCT/ISA/210 (patent family annex) (July 2022)